# EUROPEAN PATENT APPLICATION

(11) **EP 4 776 682 A1**
(43) Date of publication of application: **15.07.2026**
(21) Application number: 24870730.9
(22) Date of filing: 24.09.2024
(51) Int. Cl.: H04W 24/08, H04W 4/02

(54) **SENSING MEASUREMENT METHOD AND APPARATUS**

(30) Priority: 28.09.2023 CN 202311282722
(71) Applicant: HUAWEI TECHNOLOGIES CO., LTD., Shenzhen 518129 (CN)
(72) Inventor: ZHU, Fangyuan, Shenzhen, Guangdong 518129 (CN); YING, Jiangwei, Shenzhen, Guangdong 518129 (CN)
(74) Representative: Goddar, Heinz J.
(86) International application number: PCT/CN2024/120864
(87) International publication number: WO 2025/067186

(57) **Abstract**

A sensing measurement method and an apparatus are provided, and relate to the field of communication technologies, and can implement continuous sensing of a target object, and ensure continuity of a sensing service. The method includes: obtaining feature information of a target object; sending a first request to a first sensing device corresponding to a first location of the target object, where the first request is used to request to perform sensing measurement; receiving a sensing measurement result from the first sensing device; determining, based on the feature information of the target object and the sensing measurement result of the first sensing device, that the target object moves to a second location; sending a second request to a second sensing device corresponding to the second location, where the second request is used to request to perform sensing measurement; and receiving a sensing measurement result from the second sensing device.

## Description

This application claims priority to Chinese Patent Application No. 202311282722.6, filed with the China National Intellectual Property Administration on September 28, 2023 and entitled "SENSING MEASUREMENT METHOD AND APPARATUS", which is incorporated herein by reference in its entirety.

### TECHNICAL FIELD

This application relates to the field of communication technologies, and in particular, to a sensing measurement method and an apparatus.

### BACKGROUND

In a communication system, a sensing device may obtain a feature of a signal propagation space by analyzing a change of a radio signal in a propagation process, to implement sensing measurement on a surrounding environment.

For example, the sensing device may send a sensing signal to a target object, the sensing signal passes through the target object, and an echo signal is generated. The sensing device may implement sensing measurement on the target object based on the received echo signal.

However, the target object may continuously move. When the target object continuously moves, how to implement continuous sensing of the target object and ensure continuity of a sensing service becomes an urgent technical problem to be resolved.

### SUMMARY

Embodiments of this application provide a sensing measurement method and an apparatus, to implement continuous sensing of a target object, and ensure continuity of a sensing service.

According to a first aspect, an embodiment of this application provides a sensing measurement method. The method may be performed by a sensing function network element, or may be performed by a component (for example, a processor, a chip, or a chip system) of the sensing function network element, or may be implemented by a logical module or software that can implement all or some functions of the sensing function network element. The method includes: obtaining feature information of a target object; sending a first request to a first sensing device corresponding to a first location of the target object, where the first request is used to request to perform sensing measurement; receiving a sensing measurement result from the first sensing device; determining, based on the feature information of the target object and the sensing measurement result of the first sensing device, that the target object moves to a second location; sending a second request to a second sensing device corresponding to the second location, where the second request is used to request to perform sensing measurement; and receiving a sensing measurement result from the second sensing device.

Based on the first aspect, the sensing function network element may determine, based on the feature information of the target object, a specific target object on which sensing measurement needs to be performed, further dynamically select a proper sensing device based on a location of the target object in a moving process, for example, select the first sensing device based on the first location and select the second sensing device based on the second location, and dynamically configure/activate a sensing measurement operation of the sensing device by using the first request and the second request, to ensure that the target object is always in a sensing area of the sensing device in the moving process, so that continuous sensing of the target object is implemented, and continuity of a sensing service is ensured.

In a possible design, the feature information of the target object includes one or more of the following: a shape of the target object, a volume of the target object, and a size of the target object.

In a possible design, a third request is received from an application function network element; or a third request is received from a mobility management network element, where the third request is used to request to obtain a movement trajectory of the target object, and the third request includes the feature information of the target object.

Based on this possible design, a plurality of implementable solutions are provided for the sensing function network element to obtain the feature information of the target object.

In a possible design, the third request further includes one or more of the following: the first location, a start moment of sensing measurement, an end moment of sensing measurement, and a preset movement trajectory of the target object.

In a possible design, one or more of the following is determined based on the preset movement trajectory: the first location or the second location.

In a possible design, before the sending the first request to the first sensing device corresponding to the first location of the target object, the method further includes: receiving a sensing measurement result from a third sensing device; and determining, based on the feature information of the target object and the sensing measurement result of the third sensing device, that the target object moves to the first location.

Based on the foregoing three possible designs, the sensing function network element may determine the first location based on the third request, or may determine the first location based on the preset movement trajectory, or may determine the first location based on the feature information of the target object and the sensing measurement result of the third sensing device, to provide a plurality of feasible solutions for determining the first location. Similarly, the sensing function network element may determine the second location based on the feature information of the target object and the sensing measurement result of the first sensing device, or may determine the second location based on the preset movement trajectory, to provide a plurality of feasible solutions for determining the second location.

In a possible design, the third request includes the preset movement trajectory, and before the sending the second request to the second sensing device corresponding to the second location, the method further includes: sending a fourth request to a network repository function network element, where the fourth request is used to request to discover a sensing device, and the fourth request includes the preset movement trajectory; and receiving a fourth response from the network repository function network element, where the fourth response includes identification information of one or more sensing devices corresponding to the preset movement trajectory and sensing area information of each sensing device.

In a possible design, before the sending the second request to the second sensing device corresponding to the second location, the method further includes: receiving device information from the mobility management network element, where the device information includes identification information of one or more sensing devices and sensing area information of each sensing device.

In a possible design, before the sending the second request to the second sensing device corresponding to the second location, the method further includes: sending a fourth request to a network repository function network element, where the fourth request is used to request to discover a sensing device, and the fourth request includes the second location; and receiving a fourth response from the network repository function network element, where the fourth response includes identification information of one or more sensing devices and sensing area information of each sensing device.

In a possible design, the second sensing device is determined from the one or more sensing devices based on the second location and sensing area information of the one or more sensing devices; or the movement trajectory of the target object is predicted based on the sensing measurement result of the first sensing device, to obtain a predicted result, and the second sensing device is determined from the one or more sensing devices based on the predicted result and sensing area information of the one or more sensing devices.

Based on the foregoing four possible designs, a plurality of feasible solutions are provided for determining the second sensing device.

In a possible design, the second request is sent to the second sensing device when it is determined that the target object enters a sensing area of the second sensing device.

Based on this possible design, the sensing function network element may send the second request to the second sensing device when the target object enters the sensing area of the second sensing device, to avoid a power consumption loss caused by the second sensing device performing sensing measurement in advance.

In a possible design, the first request includes one or more of the following: the feature information of the target object, the first location, and first indication information; and/or the second request includes one or more of the following: the feature information of the target object, the second location, and first indication information, where the first indication information indicates to activate sensing measurement in all sensing areas of a sensing device.

Based on this possible design, the sensing function network element may include the feature information of the target object and/or the first location in the first request, or include the feature information of the target object and/or the second location in the second request, to indicate the first sensing device or the second sensing device to sense only the target object, thereby reducing power consumption caused by sensing. Alternatively, the sensing function network element may include the first indication information in the first request or the second request sent to the sensing device, to indicate the first sensing device or the second sensing device to activate sensing measurement in all the sensing areas of the sensing device, thereby improving accuracy of the sensing measurement result.

In a possible design, the movement trajectory of the target object is determined based on the sensing measurement result of the first sensing device and the sensing measurement result of the second sensing device; and the movement trajectory is sent to the application function network element.

In a possible design, location information of the target object is received from the application function network element; and the movement trajectory is calibrated based on the location information.

Based on this possible design, the sensing function network element may further calibrate the movement trajectory based on the location information of the target object, to improve accuracy of the movement trajectory.

In a possible design, second indication information is sent to the first sensing device, where the second indication information indicates to stop sensing measurement.

In a possible design, the second indication information is sent to the first sensing device when it is determined that the target object leaves a sensing area of the first sensing device.

Based on the foregoing two possible designs, the sensing function network element may further indicate, by using the second indication information, the sensing device to stop sensing measurement, to reduce power consumption caused by sensing.

In a possible design, a fifth request is received from the application function network element, where the fifth request is used to request to perform sensing measurement on a first area, and the fifth request includes area information of the first area; a sixth request is sent based on the fifth request to a sensing device corresponding to the first area, where the sixth request is used to request to perform sensing measurement; a sensing measurement result is received from the sensing device corresponding to the first area; and the sensing measurement result corresponding to the first area is sent to the application function network element.

Based on this possible design, the application function network element may further send the fifth request to the sensing function network element, to request to perform sensing measurement on the first area. The fifth request may include the area information of the first area. The sensing function network element may indicate, based on the fifth request, the sensing device corresponding to the first area to perform sensing measurement on the first area, and send the sensing measurement result to the application function network element. The application function network element may determine, based on the sensing measurement result of the first area, one or more of the following information about a target object on which sensing measurement needs to be performed in the first area: feature information of the target object and a first location of the target object.

According to a second aspect, an embodiment of this application provides a sensing measurement method. The method may be performed by a sensing function network element, or may be performed by a component (for example, a processor, a chip, or a chip system) of the sensing function network element, or may be implemented by a logical module or software that can implement all or some functions of the sensing function network element. The method includes: obtaining a preset movement trajectory of a target object; determining a first sensing device and a second sensing device based on the preset movement trajectory, where sensing areas of the first sensing device and the second sensing device cover the preset movement trajectory; sending a first request to the first sensing device, and sending a second request to the second sensing device, where the first request is used to request to perform sensing measurement, and the second request is used to request to perform sensing measurement; and receiving sensing measurement results from the first sensing device and the second sensing device.

Based on the second aspect, the sensing function network element may determine, based on feature information of the target object, a specific target object on which sensing measurement needs to be performed, further select a plurality of proper sensing devices, for example, the first sensing device and the second sensing device, based on the preset movement trajectory of the target object, and dynamically configure/activate sensing measurement operations of the first sensing device and the second sensing device by using the first request and the second request, to ensure that the target object is always in a sensing area of the sensing device in a moving process, so that continuous sensing of the target object is implemented, and continuity of a sensing service is ensured.

In a possible design, a third request is received from an application function network element; or a third request is received from a mobility management network element, where the third request is used to request to obtain a movement trajectory of the target object, and the third request includes the preset movement trajectory.

Based on this possible design, a plurality of implementable solutions are provided for the sensing function network element to obtain the preset movement trajectory of the target object.

In a possible design, the third request further includes one or more of the following: the feature information of the target object, a first location, a start moment of sensing measurement, and an end moment of sensing measurement. The feature information of the target object includes one or more of the following: a shape of the target object, a volume of the target object, and a size of the target object.

In a possible design, a seventh request is sent to a network repository function network element, where the seventh request is used to request to discover a sensing device, and the seventh request includes the preset movement trajectory; and a seventh response is received from the network repository function network element, where the seventh response includes identification information of the first sensing device and identification information of the second sensing device.

In a possible design, device information is received from the mobility management network element, where the device information includes identification information of one or more sensing devices and sensing area information of each sensing device; and the first sensing device and the second sensing device are determined from the one or more sensing devices based on the preset movement trajectory and the device information.

Based on the foregoing two possible designs, a plurality of feasible solutions are provided for determining the first sensing device and the second sensing device.

In a possible design, the first request includes one or more of the following: the feature information of the target object and first indication information; and/or the second request includes one or more of the following: the feature information of the target object and first indication information, where the first indication information indicates to activate sensing measurement in all sensing areas of a sensing device.

Based on this possible design, the sensing function network element may include the feature information of the target object in the first request or the second request, to indicate the first sensing device or the second sensing device to sense only the target object, thereby reducing power consumption caused by sensing. Alternatively, the sensing function network element may include the first indication information in the first request or the second request, to indicate the first sensing device or the second sensing device to activate sensing measurement in all the sensing areas of the sensing device, thereby improving accuracy of the sensing measurement result.

In a possible design, the movement trajectory of the target object is determined based on the sensing measurement results of the first sensing device and the second sensing device; and the movement trajectory is sent to the application function network element.

In a possible design, location information of the target object is received from the application function network element; and the movement trajectory is calibrated based on the location information.

Based on this possible design, the sensing function network element may further calibrate the movement trajectory based on the location information of the target object, to improve accuracy of the movement trajectory.

In a possible design, second indication information is sent to the first sensing device; and/or second indication information is sent to the second sensing device, where the second indication information indicates to stop sensing measurement.

In a possible design, the second indication information is sent to the first sensing device when it is determined, based on the sensing measurement result of the first sensing device and sensing area information of the first sensing device, that the target object leaves the sensing area of the first sensing device.

In a possible design, the second indication information is sent to the second sensing device when it is determined, based on the sensing measurement result of the second sensing device and sensing area information of the second sensing device, that the target object leaves the sensing area of the second sensing device.

Based on the foregoing three possible designs, the sensing function network element may further indicate, by using the second indication information, the first sensing device or the second sensing device to stop sensing measurement, to reduce power consumption caused by sensing.

In a possible design, a fifth request is received from the application function network element, where the fifth request is used to request to perform sensing measurement on a first area, and the fifth request includes area information of the first area; a sixth request is sent based on the fifth request to a sensing device corresponding to the first area, where the sixth request is used to request to perform sensing measurement; a sensing measurement result is received from the sensing device corresponding to the first area; and the sensing measurement result corresponding to the first area is sent to the application function network element.

Based on this possible design, the application function network element may further send the fifth request to the sensing function network element, to request to perform sensing measurement on the first area. The fifth request may include the area information of the first area. The sensing function network element may indicate, based on the fifth request, the sensing device corresponding to the first area to perform sensing measurement on the first area, and send the sensing measurement result to the application function network element. The application function network element may determine, based on the sensing measurement result of the first area, one or more of the following information about a target object on which sensing measurement needs to be performed in the first area: feature information of the target object and a first location of the target object.

According to a third aspect, an embodiment of this application provides a sensing measurement method. The method may be performed by a sensing function network element, or may be performed by a component (for example, a processor, a chip, or a chip system) of the sensing function network element, or may be implemented by a logical module or software that can implement all or some functions of the sensing function network element. The method includes: obtaining feature information of a target object; sending a first request to a first sensing device corresponding to a first location of the target object, where the first request is used to request to perform sensing measurement, and the first request includes the feature information of the target object; and receiving sensing measurement results from the first sensing device and a second sensing device, where the second sensing device is determined by the first sensing device.

Based on the third aspect, the sensing function network element may determine, based on the feature information of the target object, a specific target object on which sensing measurement needs to be performed, and further trigger the first sensing device to perform sensing measurement on the target object. Because various sensing devices may exchange device information of the sensing devices, the first sensing device may select a next sensing device, for example, the second sensing device, for the target object, to ensure that the target object is always in a sensing area of the sensing device in a moving process, so that continuous sensing of the target object is implemented, and continuity of a sensing service is ensured.

In a possible design, the feature information of the target object includes one or more of the following: a shape of the target object, a volume of the target object, and a size of the target object.

In a possible design, a third request is received from an application function network element; or a third request is received from a mobility management network element, where the third request is used to request to obtain a movement trajectory of the target object, and the third request includes the feature information of the target object.

Based on this possible design, a plurality of implementable solutions are provided for the sensing function network element to obtain the feature information of the target object.

In a possible design, the third request further includes one or more of the following: the first location, a start moment of sensing measurement, an end moment of sensing measurement, and a preset movement trajectory of the target object.

In a possible design, before the sending the first request to the first sensing device corresponding to the first location of the target object, the method further includes: sending a fourth request to a network repository function network element, where the fourth request is used to request to discover a sensing device, and the fourth request includes the first location; receiving a fourth response from the network repository function network element, where the fourth response includes identification information of one or more sensing devices and sensing area information of each sensing device; and determining the first sensing device from the one or more sensing devices based on the first location and the fourth response.

In a possible design, before the sending the first request to the first sensing device corresponding to the first location of the target object, the method further includes: receiving device information from the mobility management network element, where the device information includes identification information of one or more sensing devices and sensing area information of each sensing device; and determining the first sensing device from the one or more sensing devices based on the first location and the device information.

Based on the foregoing three possible designs, a plurality of feasible solutions are provided for determining the first sensing device.

In a possible design, the first request includes one or more of the following: the first location, first indication information, and the preset movement trajectory of the target object, where the first indication information indicates to activate sensing measurement in all sensing areas of a sensing device.

Based on this possible design, the sensing function network element may include the feature information of the target object and/or the first location in the first request, to indicate the sensing device to sense only the target object, thereby reducing power consumption caused by sensing. Alternatively, the sensing function network element may include the first indication information in the first request sent to the sensing device, to indicate the sensing device to activate sensing measurement in all the sensing areas of the sensing device, thereby improving accuracy of the sensing measurement result.

In a possible design, the movement trajectory of the target object is determined based on the sensing measurement results of the first sensing device and the second sensing device; and the movement trajectory is sent to the application function network element.

In a possible design, location information of the target object is received from the application function network element; and the movement trajectory is calibrated based on the location information.

Based on this possible design, the sensing function network element may further calibrate the movement trajectory based on the location information of the target object, to improve accuracy of the movement trajectory.

In a possible design, second indication information is sent to the first sensing device, where the second indication information indicates to stop sensing measurement.

In a possible design, the second indication information is sent to the first sensing device when it is determined that the target object leaves a sensing area of the first sensing device.

Based on the foregoing two possible designs, the sensing function network element may further indicate, by using the second indication information, the sensing device to stop sensing measurement, to reduce power consumption caused by sensing.

In a possible design, a fifth request is received from the application function network element, where the fifth request is used to request to perform sensing measurement on a first area, and the fifth request includes area information of the first area; a sixth request is sent based on the fifth request to a sensing device corresponding to the first area, where the sixth request is used to request to perform sensing measurement; a sensing measurement result is received from the sensing device corresponding to the first area; and the sensing measurement result corresponding to the first area is sent to the application function network element.

Based on this possible design, the application function network element may further send the fifth request to the sensing function network element, to request to perform sensing measurement on the first area. The fifth request may include the area information of the first area. The sensing function network element may indicate, based on the fifth request, the sensing device corresponding to the first area to perform sensing measurement on the first area, and send the sensing measurement result to the application function network element. The application function network element may determine, based on the sensing measurement result of the first area, one or more of the following information about a target object on which sensing measurement needs to be performed in the first area: feature information of the target object and a first location of the target object.

According to a fourth aspect, an embodiment of this application provides a sensing measurement method. The method may be performed by a first sensing device, or may be performed by a component (for example, a processor, a chip, or a chip system) of the first sensing device, or may be implemented by a logical module or software that can implement all or some functions of the first sensing device. The method includes: receiving a first request from a sensing function network element, where the first request is used to request to perform sensing measurement, and the first request includes feature information of a target object; performing sensing measurement on the target object to obtain a sensing measurement result; determining, based on the feature information of the target object and the sensing measurement result, that the target object moves to a second location; and sending third indication information to a second sensing device corresponding to the second location, where the third indication information is used to trigger the second sensing device to perform sensing measurement on the target object, and the third indication information includes the feature information of the target object.

Based on the fourth aspect, the sensing function network element may determine, based on the feature information of the target object, a specific target object on which sensing measurement needs to be performed, and further trigger the first sensing device to perform sensing measurement on the target object. Because various sensing devices may exchange device information of the sensing devices, the first sensing device may select a next sensing device (for example, the second sensing device) to continue to perform sensing measurement on the target object, to ensure that the target object is always in a sensing area of the sensing device in a moving process, so that continuous sensing of the target object is implemented, and continuity of a sensing service is ensured.

In a possible design, the third indication information further includes one or more of the following: the second location, a preset movement trajectory of the target object, and identification information of the sensing function network element.

In a possible design, the sensing measurement result is sent to the sensing function network element.

In a possible design, the feature information of the target object includes one or more of the following: a shape of the target object, a volume of the target object, and a size of the target object.

In a possible design, the first request further includes one or more of the following: a first location of the target object and the preset movement trajectory of the target object.

In a possible design, before the sending the third indication information to the second sensing device corresponding to the second location, the method further includes: receiving device information of one or more sensing devices, where the device information includes identification information of the sensing device and sensing area information of the sensing device; and determining the second sensing device from the one or more sensing devices based on the sensing measurement result and the device information; predicting a movement trajectory of the target object based on the sensing measurement result, to obtain a predicted result, and determining the second sensing device from the one or more sensing devices based on the predicted result and the device information; determining the second sensing device from the one or more sensing devices based on the preset movement trajectory of the target object and the device information; or determining the second sensing device from the one or more sensing devices based on the second location and/or the preset result, the preset movement trajectory of the target object, and the device information.

Based on this possible design, a plurality of feasible solutions are provided for determining the second sensing device.

In a possible design, the receiving the device information of the one or more sensing devices includes: receiving the device information from the one or more sensing devices; or receiving the device information from the sensing function network element or a mobility management network element.

According to a fifth aspect, an embodiment of this application provides a sensing measurement method. The method may be performed by a second sensing device, or may be performed by a component (for example, a processor, a chip, or a chip system) of the second sensing device, or may be implemented by a logical module or software that can implement all or some functions of the second sensing device. The method includes: receiving third indication information from a first sensing device, where the third indication information is used to trigger sensing measurement on a target object, and the third indication information includes feature information of the target object; performing sensing measurement on the target object to obtain a sensing measurement result; and sending the sensing measurement result to a sensing function network element.

Based on the fifth aspect, because various sensing devices may exchange device information of the sensing devices, the first sensing device may select the second sensing device to continue to perform sensing measurement on the target object, to ensure that the target object is always in a sensing area of the sensing device in a moving process, so that continuous sensing of the target object is implemented, and continuity of a sensing service is ensured.

In a possible design, the third indication information further includes one or more of the following: a second location, a preset movement trajectory of the target object, and identification information of the sensing function network element.

In a possible design, the feature information of the target object includes one or more of the following: a shape of the target object, a volume of the target object, and a size of the target object.

In a possible design, it is determined, based on the feature information of the target object and the sensing measurement result, that the target object moves to a fourth location; and fourth indication information is sent to a fourth sensing device corresponding to the fourth location, where the fourth indication information includes the feature information of the target object.

Based on this possible design, because various sensing devices may exchange device information of the sensing devices, the second sensing device may select the fourth sensing device to continue to perform sensing measurement on the target object, to ensure that the target object is always in a sensing area of the sensing device in a moving process, so that continuous sensing of the target object is implemented, and continuity of a sensing service is ensured.

In a possible design, the fourth indication information further includes one or more of the following: the fourth location and a preset movement trajectory of the target object.

According to a sixth aspect, an embodiment of this application provides a sensing measurement method. The method may be performed by an application function network element, or may be performed by a component (for example, a processor, a chip, or a chip system) of the application function network element, or may be implemented by a logical module or software that can implement all or some functions of the application function network element. The method includes: sending a third request to a sensing function network element, where the third request is used to request to obtain a movement trajectory of a target object, and the third request includes feature information of the target object; and receiving a third response from the sensing function network element, where the third response includes the movement trajectory of the target object.

Based on the sixth aspect, the application function network element may trigger the sensing function network element to implement continuous sensing of the target object, to ensure continuity of a sensing service.

In a possible design, the feature information of the target object includes one or more of the following: a shape of the target object, a volume of the target object, and a size of the target object.

In a possible design, the third request further includes one or more of the following: a first location of the target object, a start moment of sensing measurement, an end moment of sensing measurement, and a preset movement trajectory of the target object.

In a possible design, location information of the target object is obtained; and the location information is sent to the sensing function network element.

In a possible design, before the sending the third request to the sensing function network element, the method further includes: sending a fifth request to the sensing function network element, where the fifth request is used to request to perform sensing measurement on a first area, and the fifth request includes area information of the first area; receiving a sensing measurement result corresponding to the first area from the sensing function network element; and determining one or more of the following based on the sensing measurement result corresponding to the first area: the feature information of the target object and the first location of the target object.

In a possible design, the movement trajectory of the target object is calibrated based on one or more of the following: the feature information of the target object, the preset movement trajectory of the target object, and the location information of the target object.

Based on this possible design, the application function network element may calibrate the movement trajectory of the target object, to improve accuracy of the movement trajectory.

According to a seventh aspect, an embodiment of this application provides a sensing measurement method. The method may be performed by a sensing function network element, or may be performed by a component (for example, a processor, a chip, or a chip system) of the sensing function network element, or may be implemented by a logical module or software that can implement all or some functions of the sensing function network element. The method includes: sending a first request to a first access network device, and receiving a sensing measurement result from the first access network device, where the first request is used to request the first access network device to perform sensing measurement on a target object; receiving sixth indication information from a mobility management network element, where the sixth indication information includes identification information of a second access network device currently accessed by the target object; and sending a second request to the second access network device based on the sixth indication information, where the second request is used to request the second access network device to perform sensing measurement, and receiving a sensing measurement result from the second access network device.

Based on the seventh aspect, the target object does not participate in a sensing measurement process, and the target object may have identification information. The sensing function network element may implement continuous sensing measurement on the target object based on the identification information of the target object by using a communication capability. For example, an access network device (for example, an access network device having a sensing function, where the access network device may also be referred to as a sensing device) that can provide a communication link may be used for sensing. When a communication link of the target object is switched, switching of the access network device may be triggered, to ensure that the target object is always in a sensing area of the access network device in a moving process, so that continuous sensing of the target object is implemented, and continuity of a sensing service is ensured.

In a possible design, an eighth request is sent to the mobility management network element, where the eighth request is used to request to obtain identification information of an access network device accessed by the target object, the access network device has a sensing capability, and the eighth request includes identification information of the target object.

In a possible design, before the sending the first request to the first access network device, the method further includes: receiving fifth indication information from the mobility management network element, where the fifth indication information includes identification information of the first access network device.

In a possible design, before the sending the eighth request to the mobility management network element, the method further includes: receiving a ninth request from an application function network element; or receiving a ninth request from the mobility management network element, where the ninth request is used to request to obtain a movement trajectory of the target object, and the ninth request includes the identification information of the target object.

Based on this possible design, a plurality of feasible solutions are provided for the sensing function network element to obtain the identification information of the target object.

In a possible design, the ninth request further includes one or more of the following: a first location of the target object, a start moment of sensing measurement, an end moment of sensing measurement, a preset movement trajectory of the target object, and feature information of the target object. The feature information of the target object includes one or more of the following: a shape of the target object, a volume of the target object, and a size of the target object.

In a possible design, the first request includes one or more of the following: the identification information of the target object, the feature information of the target object, the first location of the target object, first indication information, and the preset movement trajectory of the target object; and/or the second request includes one or more of the following: the identification information of the target object, the feature information of the target object, a second location of the target object, first indication information, and the preset movement trajectory of the target object, where the first indication information indicates to activate sensing measurement in all sensing areas of a sensing device.

Based on this possible design, the sensing function network element may include the identification information, the feature information, and/or the first location of the target object in the first request, or include the identification information, the feature information, and/or the second location of the target object in the second request, to indicate the first access network device or the second access network device to sense only the target object, thereby reducing power consumption caused by sensing. Alternatively, the sensing function network element may include the first indication information in the first request or the second request, to indicate the first access network device or the second access network device to activate sensing measurement in all the sensing areas of the access network device, thereby improving accuracy of the sensing measurement result.

In a possible design, second indication information is sent to the first access network device, where the second indication information indicates to stop sensing measurement.

In a possible design, the second indication information is sent to the first access network device when it is determined that the target object leaves a sensing area of the first access network device.

In a possible design, the second indication information is sent to the first access network device when it is determined, based on the identification information of the second access network device, that the target object leaves a sensing area of the first access network device.

Based on the foregoing three possible designs, the sensing function network element may further indicate, by using the second indication information, the first access network device to stop sensing measurement, to reduce power consumption caused by sensing.

In a possible design, the movement trajectory of the target object is determined from the sensing measurement result based on the identification information of the target object or the feature information of the target object; and the movement trajectory is sent to the application function network element or the mobility management network element.

In a possible design, location information of the target object is received from the application function network element; and the movement trajectory is calibrated based on the location information.

Based on this possible design, the sensing function network element may further calibrate the movement trajectory based on the location information of the target object, to improve accuracy of the movement trajectory.

In a possible design, a tenth request is sent to the mobility management network element, where the tenth request is used to request location information of the target object; a tenth response is received from the mobility management network element, where the tenth response includes the location information of the target object; and the movement trajectory is calibrated based on the location information.

Based on this possible design, when a breakpoint occurs in the movement trajectory, the sensing function network element may further trigger a procedure of positioning the target object by the mobility management network element, to calibrate the movement trajectory based on the location information of the target object, thereby improving accuracy of the movement trajectory.

According to an eighth aspect, an embodiment of this application provides a communication apparatus. The communication apparatus may be used for the sensing function network element in the first aspect, the second aspect, the third aspect, or the seventh aspect, to implement a function performed by the sensing function network element. The communication apparatus may be a sensing function network element, or may be a chip, a chip system, a system on chip, or the like of the sensing function network element. The communication apparatus may perform, by using hardware, the function performed by the sensing function network element, or may be implemented by hardware executing corresponding software. The hardware or the software includes one or more modules corresponding to the function, for example, a transceiver module and a processing module. The transceiver module may independently complete the following sending and receiving operations, or may cooperate with the processing module to complete the following sending and receiving operations. Correspondingly, the processing module may independently complete the following processing operation, or may cooperate with the transceiver module to complete the following processing operation. This is not limited.

For example, the transceiver module is configured to obtain feature information of a target object; send a first request to a first sensing device corresponding to a first location of the target object, where the first request is used to request to perform sensing measurement; and receive a sensing measurement result from the first sensing device; the processing module is configured to determine, based on the feature information of the target object and the sensing measurement result of the first sensing device, that the target object moves to a second location; and the transceiver module is further configured to send a second request to a second sensing device corresponding to the second location; and receive a sensing measurement result from the second sensing device, where the second request is used to request to perform sensing measurement.

For another example, the transceiver module is configured to obtain a preset movement trajectory of a target object; the processing module is configured to determine a first sensing device and a second sensing device based on the preset movement trajectory, where sensing areas of the first sensing device and the second sensing device cover the preset movement trajectory; the transceiver module is further configured to send a first request to the first sensing device, and send a second request to the second sensing device, where the first request is used to request to perform sensing measurement, and the second request is used to request to perform sensing measurement; and the transceiver module is further configured to receive sensing measurement results from the first sensing device and the second sensing device.

For another example, the transceiver module is configured to obtain feature information of a target object; and send a first request to a first sensing device corresponding to a first location of the target object, where the first request is used to request to perform sensing measurement, and the first request includes the feature information of the target object; and the transceiver module is further configured to receive sensing measurement results from the first sensing device and a second sensing device, where the second sensing device is determined by the first sensing device.

For another example, the transceiver module is configured to send a first request to a first access network device, and receive a sensing measurement result from the first access network device, where the first request is used to request a first sensing device to perform sensing measurement on a target object; the transceiver module is further configured to receive sixth indication information from a mobility management network element, where the sixth indication information includes identification information of a second access network device currently accessed by the target object; and the transceiver module is further configured to send a second request to the second access network device based on the sixth indication information, and receive a sensing measurement result from the second access network device, where the second request is used to request the second access network device to perform sensing measurement.

Optionally, the transceiver module and the processing module of the communication apparatus in the eighth aspect may further perform corresponding functions in any one of the first aspect or the possible designs of the first aspect, perform corresponding functions in any one of the second aspect or the possible designs of the second aspect, perform corresponding functions in any one of the third aspect or the possible designs of the third aspect, or perform corresponding functions in any one of the seventh aspect or the possible designs of the seventh aspect. For details, refer to the detailed descriptions in the method examples. For beneficial effects that can be achieved, refer to the foregoing related content.

According to a ninth aspect, an embodiment of this application provides a communication apparatus. The communication apparatus may be used for the first sensing device in the fourth aspect, to implement a function performed by the first sensing device. The communication apparatus may be a first sensing device, or may be a chip, a chip system, a system on chip, or the like of the first sensing device. The communication apparatus may perform, by using hardware, the function performed by the first sensing device, or may be implemented by hardware executing corresponding software. The hardware or the software includes one or more modules corresponding to the function, for example, a transceiver module and a processing module. The transceiver module may independently complete the following sending and receiving operations, or may cooperate with the processing module to complete the following sending and receiving operations. Correspondingly, the processing module may independently complete the following processing operation, or may cooperate with the transceiver module to complete the following processing operation. This is not limited.

For example, the transceiver module is configured to receive a first request from a sensing function network element, where the first request is used to request to perform sensing measurement, and the first request includes feature information of a target object; the processing module is configured to perform sensing measurement on the target object to obtain a sensing measurement result; and determine, based on the feature information of the target object and the sensing measurement result, that the target object moves to a second location; and the transceiver module is further configured to send third indication information to a second sensing device corresponding to the second location, where the third indication information is used to trigger the second sensing device to perform sensing measurement on the target object, and the third indication information includes the feature information of the target object.

Optionally, the transceiver module and the processing module of the communication apparatus in the ninth aspect may further perform corresponding functions in any one of the fourth aspect or the possible designs of the fourth aspect. For details, refer to the detailed descriptions in the method examples. For beneficial effects that can be achieved, refer to the foregoing related content.

According to a tenth aspect, an embodiment of this application provides a communication apparatus. The communication apparatus may be used for the second sensing device in the fifth aspect, to implement a function performed by the second sensing device. The communication apparatus may be a second sensing device, or may be a chip, a chip system, a system on chip, or the like of the second sensing device. The communication apparatus may perform, by using hardware, the function performed by the second sensing device, or may be implemented by hardware executing corresponding software. The hardware or the software includes one or more modules corresponding to the function, for example, a transceiver module and a processing module. The transceiver module may independently complete the following sending and receiving operations, or may cooperate with the processing module to complete the following sending and receiving operations. Correspondingly, the processing module may independently complete the following processing operation, or may cooperate with the transceiver module to complete the following processing operation. This is not limited.

For example, the transceiver module is configured to receive third indication information from a first sensing device, where the third indication information is used to trigger sensing measurement on a target object, and the third indication information includes feature information of the target object; the processing module is configured to perform sensing measurement on the target object to obtain a sensing measurement result; and the transceiver module is further configured to send the sensing measurement result to a sensing function network element.

Optionally, the transceiver module and the processing module of the communication apparatus in the tenth aspect may further perform corresponding functions in any one of the fifth aspect or the possible designs of the fifth aspect. For details, refer to the detailed descriptions in the method examples. For beneficial effects that can be achieved, refer to the foregoing related content.

According to an eleventh aspect, an embodiment of this application provides a communication apparatus. The communication apparatus may be used for the application function network element in the sixth aspect, to implement a function performed by the application function network element. The communication apparatus may be an application function network element, or may be a chip, a chip system, a system on chip, or the like of the application function network element. The communication apparatus may perform, by using hardware, the function performed by the application function network element, or may be implemented by hardware executing corresponding software. The hardware or the software includes one or more modules corresponding to the function, for example, a transceiver module and a processing module. The transceiver module may independently complete the following sending and receiving operations, or may cooperate with the processing module to complete the following sending and receiving operations. Correspondingly, the processing module may independently complete the following processing operation, or may cooperate with the transceiver module to complete the following processing operation. This is not limited.

For example, the transceiver module is configured to send a third request to a sensing function network element, where the third request is used to request to obtain a movement trajectory of a target object, and the third request includes feature information of the target object; and the transceiver module is further configured to receive a third response from the sensing function network element, where the third response includes the movement trajectory of the target object.

Optionally, the transceiver module and the processing module of the communication apparatus in the eleventh aspect may further perform corresponding functions in any one of the sixth aspect or the possible designs of the sixth aspect. For details, refer to the detailed descriptions in the method examples. For beneficial effects that can be achieved, refer to the foregoing related content.

According to a twelfth aspect, an embodiment of this application provides a communication apparatus. The communication apparatus includes one or more processors. The one or more processors are configured to run a computer program or instructions. When the one or more processors execute the computer instruction or the instructions, the sensing measurement method in any one of the first aspect to the seventh aspect is performed.

In a possible design, the communication apparatus further includes one or more memories, the one or more memories are coupled to the one or more processors, and the one or more memories are configured to store the computer program or the instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a thirteenth aspect, an embodiment of this application provides a communication apparatus. The communication apparatus includes an interface circuit and a logic circuit. The interface circuit is configured to input and/or output information. The logic circuit is configured to perform the sensing measurement method in any one of the first aspect to the seventh aspect, and perform processing based on the information and/or generate the information.

According to a fourteenth aspect, an embodiment of this application provides a computer-readable storage medium. The computer-readable storage medium stores computer instructions or a program. When the computer instructions or the program is run on a computer, the sensing measurement method in any one of the first aspect to the seventh aspect is performed.

According to a fifteenth aspect, an embodiment of this application provides a computer program product including computer instructions. When the computer program product runs on a computer, the sensing measurement method in any one of the first aspect to the seventh aspect is performed.

According to a sixteenth aspect, an embodiment of this application provides a computer program. When the computer program is run on a computer, the sensing measurement method in any one of the first aspect to the seventh aspect is performed.

According to a seventeenth aspect, an embodiment of this application provides a chip, including a processor, where the processor is coupled to a memory, the memory is configured to store a program or instructions, and when the program or the instructions are executed by the processor, the sensing measurement method in any one of the first aspect to the seventh aspect is performed.

For technical effects brought by any design in the twelfth aspect to the seventeenth aspect, refer to the technical effects brought by any one of the first aspect to the seventh aspect. Details are not described again.

According to an eighteenth aspect, an embodiment of this application provides a communication system. The communication system may include the communication apparatus configured to perform any one of the first aspect or the possible designs of the first aspect and the communication apparatus configured to perform any one of the sixth aspect or the possible designs of the sixth aspect, or include the communication apparatus configured to perform any one of the second aspect or the possible designs of the second aspect and the communication apparatus configured to perform any one of the sixth aspect or the possible designs of the sixth aspect, or include the communication apparatus configured to perform any one of the third aspect or the possible designs of the third aspect, the communication apparatus configured to perform any one of the fourth aspect or the possible designs of the fourth aspect, the communication apparatus configured to perform any one of the fifth aspect or the possible designs of the fifth aspect, and the communication apparatus configured to perform any one of the sixth aspect or the possible designs of the sixth aspect, or include the communication apparatus configured to perform any one of the seventh aspect or the possible designs of the seventh aspect.

### BRIEF DESCRIPTION OF DRAWINGS

FIG. 1 is a diagram of sensing measurement according to an embodiment of this application;
FIG. 2 is a diagram of sensing measurement according to an embodiment of this application;
FIG. 3 is a diagram of sensing measurement according to an embodiment of this application;
FIG. 4 is a diagram of a communication system according to an embodiment of this application;
FIG. 5 is a diagram of a 5G communication system according to an embodiment of this application;
FIG. 6 is a diagram of a 5G communication system according to an embodiment of this application;
FIG. 7 is a diagram of a communication apparatus according to an embodiment of this application;
FIG. 8 is a diagram of a sensing measurement method according to an embodiment of this application;
FIG. 9 is a flowchart of a sensing measurement method according to an embodiment of this application;
FIG. 10 is a diagram of a sensing measurement method according to an embodiment of this application;
FIG. 11 is a diagram of a sensing measurement method according to an embodiment of this application;
FIG. 12A and FIG. 12B are a flowchart of a sensing measurement method according to an embodiment of this application;
FIG. 13 is a flowchart of a sensing measurement method according to an embodiment of this application;
FIG. 14A and FIG. 14B are a flowchart of a sensing measurement method according to an embodiment of this application;
FIG. 15 is a flowchart of a sensing measurement method according to an embodiment of this application;
FIG. 16A and FIG. 16B are a flowchart of a sensing measurement method according to an embodiment of this application;
FIG. 17 is a flowchart of a sensing measurement method according to an embodiment of this application;
FIG. 18A and FIG. 18B are a flowchart of a sensing measurement method according to an embodiment of this application;
FIG. 19A and FIG. 19B are a flowchart of a sensing measurement method according to an embodiment of this application;
FIG. 20A and FIG. 20B are a flowchart of a sensing measurement method according to an embodiment of this application;
FIG. 21 is a diagram of a communication apparatus according to an embodiment of this application; and
FIG. 22 is a diagram of a communication apparatus according to an embodiment of this application.

### DESCRIPTION OF EMBODIMENTS

Before embodiments of this application are described, technical terms used in embodiments of this application are described.

**Wireless sensing technology:** Existing wireless signals (such as sound, light, and radio frequency signals) in an environment may be "additionally" used to sense the environment while completing their primary tasks (such as illumination and communication). The radio frequency signal is used as an example. A radio wave generated by a signal transmitter may undergo physical phenomena such as direct radiation, reflection, and scattering in a propagation process, to form a plurality of propagation paths. In this way, a multi-path superimposed signal formed at a signal receiver carries information reflecting signal propagation space. The wireless sensing technology (also referred to as a non-sensor scenario sensing technology) is that a feature of the signal propagation space (channel) is obtained by analyzing a change of a wireless signal in a propagation process, to implement scenario sensing. In a wireless communication process, electromagnetic waves carry environment information when transferring signals in space propagation. For example, if a wireless fidelity (wireless fidelity, Wi-Fi) signal received by a mobile phone is weak, a possible cause is that the mobile phone is far away from a wireless router. If strength of a Wi-Fi signal received by a mobile phone decreases sharply, a possible cause is that the mobile phone enters specific closed space, such as an elevator. In this example, received signal strength (received signal strength indicator, RSSI) is used as a feature to infer a location and an environment of the mobile phone. Selection of the signal feature significantly affects sensing accuracy, reliability, a model generalization capability, and the like.

**Radar sensing:** is a common wireless sensing technology. A feature of a received echo signal of a target object is analyzed, a location, a shape, a movement feature, and a movement trajectory of the target object are extracted and discovered, and features of the target object and an environment may be further inferred. Radar sensing acts like human eyes and ears. Compared with another sensor, radar sensing has many unique advantages. For example, compared with a visual sensor, radar is not affected by light, has a capability of penetrating an obstacle, and can better protect personal privacy. Compared with an ultrasound technology, radar senses a longer distance, and does not cause damage to a person or an animal. Radar sensing may support a wide range of application scenarios. For example, millimeter-wave radar has been widely used in the field of vehicle-assisted driving to detect pedestrians and preceding vehicles and implement anti-collision warning. In addition, radar sensing has many potential applications in fields such as home, smart building, self-driving, and wearable devices. With the continuous development of new low-power and small radar sensors, a radar technology has been widely used in many intelligent devices and electronic products. As shown in Table 1, a surrounding environment/object may be sensed based on attenuation and reflection in a signal transmission process.

**Table 1**

| Communication sensing type | Sensing function | Application scenario |
|---|---|---|
| Macro sensing | Weather, air quality, and the like | Meteorology, agriculture, and life services |
| | Traffic flow (at an intersection) and pedestrian flow (at a subway entrance) | Intelligent transportation and business services |
| | Animal activities, migration, and the like | Animal husbandry, ecological environment protection, and the like |
| | Target tracking, ranging, speed measurement, contours, and the like | Many application scenarios for conventional radar |
| | Three-dimensional map construction | Intelligent driving and navigation (car/uncrewed aerial vehicles), smart city (3D map), and network planning and optimization |
| Short-distance refined sensing | Action and posture recognition | Intelligent interaction of smartphones, games, and smart home |
| | Heartbeat/breathing and the like | Health and medical care |
| | Imaging, material detection, and the like | Security check, industry, and the like |

The radar sensing technology has an advantage in movement detection. A movement status, such as a movement direction and a movement speed, of the target object is observed and interpreted by using a Doppler effect of the echo signal of target object. When a multi-channel sensor is used, movement of the target object may be further observed from different angles of view. The movement status of the target object is collected from different angles of view and is analyzed with reference to instantaneous information and historical information, to achieve resolution of complex movement.

With reference to the following four manners, the wireless sensing technology is briefly described below by detecting whether a target object exists and detecting a movement direction of the target object.

Manner 1: A signal transmitter sends a sensing signal, and a signal receiver detects the sensing signal.

Manner 2: Whether a target object passes through a detection area is determined based on a change of a wireless received signal strength. This manner is mainly used for line of sight (line of sight, LOS) scenario detection.

Manner 3: Processing is performed through filtering and other techniques by using amplitude and phase information in channel state information, to replace wireless received signal strength detection, thereby improving detection accuracy of the target object, especially non-line of sight (non-line of sight, NLOS) scenario detection.

Manner 4: Movement direction information of a target object in a monitoring area is obtained based on channel state information analysis of a plurality of signal receivers.

With the development of a 5th generation (5th generation, 5G) mobile communication network, requirements on a new sensing-based network capability are gradually emerging. For example, in some scenarios such as smart city and smart transportation, requirements for obtaining relative locations and angles between target objects and information such as a distance, a speed, and a shape of the target object gradually emerge. To meet these service requirements, the 5G network should be further enhanced, and has a capability of assisting a wireless network in sensing. In the future, the 5G network may be deployed with a radar-communication integrated base station to enhance a sensing capability of a base station. A precise sensing capability of the radar may be used to perform precise communication and improve communication efficiency. For example, time division multiplexing or spatial division multiplexing may be performed on a communication resource and a sensing resource of the base station, to sense a surrounding environment or object. A sensing function may be used for detection in security scenarios in which cameras cannot be installed. For example, in a specific industrial park, intrusion of flying objects such as an uncrewed aerial vehicle can be detected. In a traffic scenario, a roadside station may complete functions such as traffic flow statistics collection and vehicle navigation. These functions require a roadside base station to have a specific sensing capability.

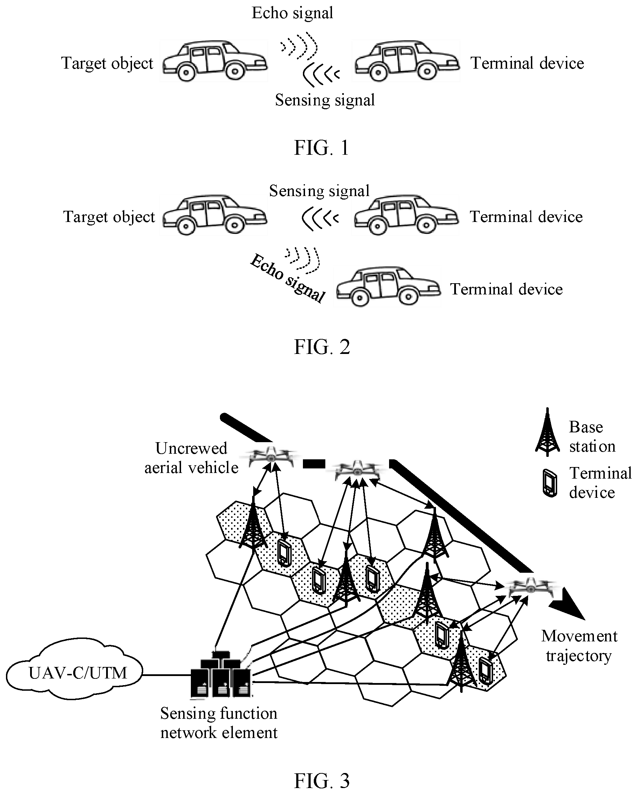

In addition, a terminal device in the 5G network may also have a sensing capability, to sense a surrounding environment or object. For example, as shown in FIG. 1, the terminal device may send a sensing signal, and collect an echo signal reflected to another target object in a surrounding environment. This process may be referred to as sensing measurement, and this sensing measurement mode may also be referred to as self-sending and self-receiving. For another example, as shown in FIG. 2, the terminal device may send a sensing signal, and another terminal device collects an echo signal reflected to another target object in a surrounding environment. This sensing measurement mode may also be referred to as sending by the terminal device and receiving by the another terminal device.

It may be understood that different sensing measurement modes have different requirements on terminal device capabilities. In different application scenarios, different sensing measurement modes may be used to perform sensing measurement on a surrounding environment. In addition, the terminal devices in FIG. 1 and FIG. 2 may alternatively be replaced with sensing devices such as a base station.

Based on the foregoing descriptions of communication sensing, when the target object continuously moves, in a process of executing a flight mission, an uncrewed aerial vehicle shown in FIG. 3 may cross sensing areas of a plurality of base stations. From the perspective of a service, an uncrewed aerial vehicle controller (unmanned aerial vehicle controller, UAV-C) or an uncrewed aerial vehicle system traffic management (unmanned aerial system traffic management, UTM) network element needs to continuously track and sense the target object via a sensing function network element, to ensure that a sensing service provided by a communication system can meet a user requirement.

Therefore, when the target object continuously moves, how to implement continuous sensing of the target object and ensure continuity of a sensing service becomes an urgent technical problem to be resolved.

The following describes implementations of embodiments of this application in detail with reference to the accompanying drawings in this specification.

A sensing measurement method provided in embodiments of this application may be used in any communication system. The communication system may be a third generation partnership project (third generation partnership project, 3GPP) communication system, for example, a long term evolution (long term evolution, LTE) system, or may be a 5G mobile communication system, a new radio (new radio, NR) communication system, or a new radio vehicle to everything (vehicle to everything, NR V2X) system, or may be an LTE and 5G hybrid networking system, a non-terrestrial network (non-terrestrial network, NTN) system, a device-to-device (device-to-device, D2D) communication system, a machine to machine (machine to machine, M2M) communication system, an internet of things (internet of things, IoT), and another next generation communication system, for example, a future communication system like 6G, or may be a non-3GPP communication system. This is not limited.

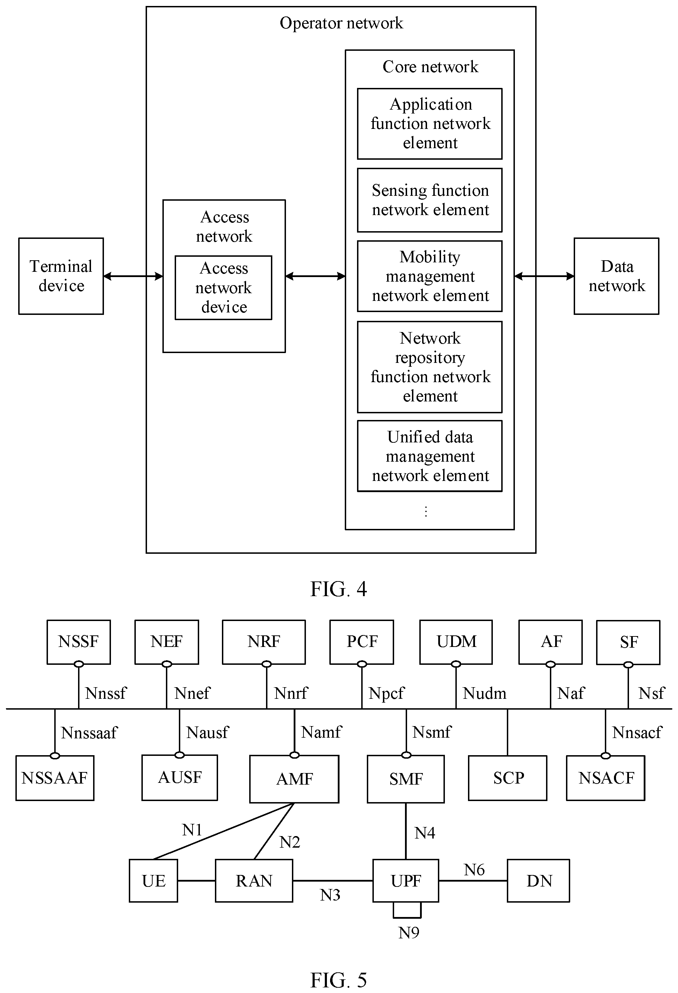

The following uses FIG. 4 as an example to describe the communication system provided in embodiments of this application.

FIG. 4 is a diagram of a communication system according to an embodiment of this application. As shown in FIG. 4, the communication system may include one or more terminal devices, an operator network, and a data network (data network, DN).

The operator network may include an access network and a core network. The access network may include one or more access network devices, and the core network may include network elements such as an application function network element, a sensing function network element, a mobility management network element, a network repository function network element, and a unified data management network element. This is not limited.

The terminal device in FIG. 4 may be located in a beam/cell coverage area of the access network device, and the access network device may provide a communication service for the terminal device.

The terminal device in FIG. 4 may be a device having a wireless transceiver function or a chip or a chip system that may be disposed in the device, may allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

For example, the terminal device in FIG. 4 may be a mobile phone (mobile phone), a tablet computer, or a computer having a wireless transceiver function. Alternatively, the terminal device may be a user station, a mobile station, a remote station, a remote terminal device, a mobile terminal device, a user terminal device, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, a processing device connected to a wireless modem, a vehicle-mounted device, a wearable device, a terminal device in the internet of things, household appliance, a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, a terminal device in a future network, a terminal device in a future evolved public land mobile network (public land mobile network, PLMN), or the like. This is not limited.

The access network device in FIG. 4 may be any device that is deployed in the access network and that can perform wireless communication with the terminal device, or may be a chip or a chip system that may be disposed in the device, or may be a logical node, a logical module, or a function implemented by software, and may be configured to implement functions such as a radio physical control function, resource scheduling and radio resource management, radio access control, and mobility management. Specifically, the network device may be a device supporting wired access, or may be a device supporting wireless access.

For example, the access network device may include one or more access network (access network, AN) or radio access network (radio access network, RAN) nodes. The AN/RAN node may be a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. This is not limited.

For another example, the access network device may be a device including a central unit (central unit, CU) node, a distributed unit (distributed unit, DU) node, or a CU node and a DU node. For example, the access network device may be divided into a CU and a DU from the perspective of logical functions. Functions of some protocol layers are centrally controlled by the CU, and functions of some or all of remaining protocol layers are distributed in the DU, and the CU centrally controls the DU. Further, the central unit CU may be divided into a control plane (CU-CP) and a user plane (CU-UP). In different systems, a CU (including a CU-CP or a CU-UP) or a DU may have different names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

The application function network element is mainly responsible for providing an application layer service for the terminal device. When providing a service for the terminal device, the application function network element has a requirement on a quality of service policy (quality of service policy, QoS policy) and a charging policy (charging policy), and needs to notify a network. In addition, the application function network element also needs application-related information fed back by the core network.

The sensing function network element in the core network in FIG. 4 is mainly responsible for activating/authorizing, based on a received sensing measurement request, a corresponding sensing device to perform sensing measurement. Optionally, the sensing function network element may be an independent core network element, or may be co-deployed with another core network element (for example, the sensing function network element in the following may alternatively be a session management network element or a mobility management network element that is deployed with functions such as receiving a sensing measurement request and activating/authorizing a corresponding sensing device).

The mobility management network element in the core network in FIG. 4 is mainly responsible for mobility management of a user, including mobility status management, allocation of a temporary user identity, authentication and authorization of the user, and the like.

The network repository function network element in the core network in FIG. 4 is mainly responsible for registration and discovery functions of a network element, and maintains information about the network element, for example, maintains information such as an instance identifier, a type, a PLMN, a slice-related identifier, and an IP address or an FQDN of the network element, a capability of the network element, and a service supported by the network element.

The unified data management network element in the core network in FIG. 4 is mainly responsible for managing subscription data, and is responsible for notifying a corresponding network element when the subscription data is modified.

Optionally, the core network in FIG. 4 may further include an authentication service network element, a unified data repository, a network slice selection network element, a network exposure network element, a policy control network element, a network slice specific authentication and authorization function network element, an authentication server function network element, a service communication proxy network element, a session management network element, a user plane network element, a network slice admission control function network element, and the like. This is not limited.

The session management network element is mainly responsible for UP network element selection, UP network element reselection, and internet protocol (internet protocol, IP) address allocation, and may be further responsible for bearer setup, modification, and release, QoS control, and the like.

The unified data repository is mainly responsible for storing and retrieving subscription data, policy data, common architecture data, and the like, and is used by the unified data management network element, the policy control network element, and the network exposure network element to obtain related data. The unified data repository can have different data access authentication mechanisms for different types of data, such as subscription data and policy data, to ensure data access security. For an invalid service-oriented operation or a data access request, the unified data repository can return a failure response carrying a proper cause value.

The user plane network element is mainly responsible for supporting all or some of the following functions: interconnection between a PDU session and a data network; packet routing and forwarding (for example, supporting forwarding of traffic to the data network after performing an uplink classifier on the traffic, and supporting a branching point to support a multi-homed PDU session); and data packet detection.

The network slice selection network element is mainly responsible for network slice selection.

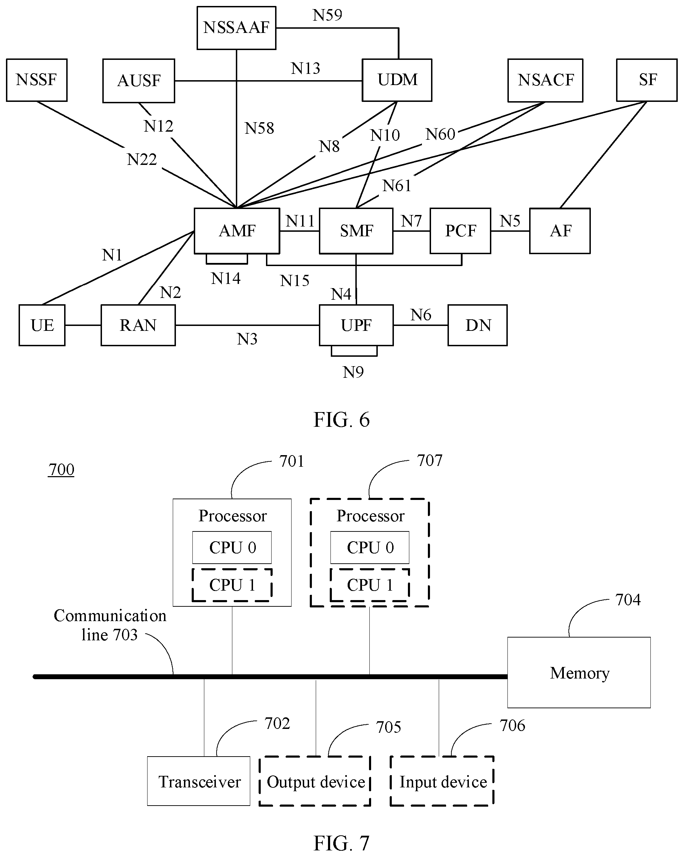

Based on the foregoing descriptions of the communication system, an example in which the communication system shown in FIG. 4 is a 5G communication system is used. As shown in FIG. 5 or FIG. 6, a network element or an entity corresponding to an access network device may be a RAN in the 5G communication system, a network element or an entity corresponding to a user plane network element may be a user plane function (user plane function, UPF) in the 5G communication system, a network element or an entity corresponding to a sensing function network element may be a sensing function (sensing function, SF) in the 5G communication system, a network element or an entity corresponding to a network slice selection network element may be a network slice selection function (network slice selection function, NSSF) in the 5G communication system, a network element or an entity corresponding to a network exposure network element may be a network exposure function (network exposure function, NEF) in the 5G communication system, a network element or an entity corresponding to a network repository function network element may be a network repository function (network repository function, NRF) in the 5G communication system, a policy control network element may be a policy control function (policy control function, PCF) in the 5G communication system, a network element or an entity corresponding to a unified data management network element may be a unified data management (unified data management, UDM) in the 5G communication system, a network element or an entity corresponding to an application function network element may be an application function (application function, AF) in the 5G communication system, a network element or an entity corresponding to a network slice specific authentication and authorization function network element may be a network slice specific authentication and authorization function (network slice specific authentication and authorization function, NSSAAF) in the 5G communication system, a network element or an entity corresponding to an authentication server function network element may be an authentication server function (authentication server function, AUSF) in the 5G communication system, a network element or an entity corresponding to a mobility management network element may be an access and mobility management function (access and mobility management function, AMF) in the 5G communication system, a network element or an entity corresponding to a session management network element may be a session management function (session management function, SMF) in the 5G communication system, a network element or an entity corresponding to a service communication agent network element may be a service communication agent (service communication proxy, SCP) in the 5G communication system, a network element or an entity corresponding to a network slice admission control function network element may be a network slice admission control function (network slice admission control function, NSACF) in the 5G communication system, and the like.

As shown in FIG. 5 or FIG. 6, UE may communicate with the AMF through an N1 interface, the RAN may communicate with the AMF through an N2 interface, the RAN may further communicate with the UPF through an N3 interface, the UPF may communicate with the SMF through an N4 interface, the UPF may communicate with another UPF through an N9 interface, and the UPF may further communicate with an application server in a DN through an N6 interface.

As shown in FIG. 5, various network elements in the core network may obtain a service of each other by invoking a service-based interface of each other. For example, a service provided by the NSSF may be invoked through an Nnssf interface, a service provided by the NEF may be invoked through an Nnef interface, a service provided by the NRF may be invoked through an Nnrf interface, a service provided by the PCF may be invoked through an Npcf interface, a service provided by the UDM may be invoked through an Nudm interface, a service provided by the AF may be invoked through an Naf interface, a service provided by the SF may be invoked through an Nsf interface, a service provided by the NSSAAF may be invoked through an Nnssaaf interface, a service provided by the AUSF may be invoked through an Nausf interface, a service provided by the AMF may be invoked through an Namf interface, a service provided by the SMF may be invoked through an Nsmf interface, and a service provided by the NSACF may be invoked through an Nnsacf interface.

As shown in FIG. 6, various network elements in the core network may obtain a service of each other through a point-to-point interface. For example, the AMF may communicate with another AMF, the NSSF, the AUSF, the NSSAAF, the UDM, the NSACF, the SMF, and the PCF through N14, N22, N12, N58, N8, N60, N11, and N15 interfaces respectively, the SMF may communicate with the UDM, the NSACF, and the PCF through N10, N61, and N7 interfaces respectively, the PCF may communicate with the AF through an N5 interface, the AUSF may communicate with the UDM through an N13 interface, and the NSSAAF may communicate with the UDM through an N59 interface. The SF may have an interface with each network element in the core network, or may have an interface with only a part of network elements. This is not limited in this application.

It may be understood that the terminal device, the access network device, and each network element in the core network in embodiments of this application may be one or more chips, or may be a system on chip (system on chip, SoC), or the like. FIG. 4 to FIG. 6 are merely examples of the accompanying drawings, and a quantity of devices included in FIG. 4 to FIG. 6 is not limited. Names of the devices and names of links in FIG. 4 to FIG. 6 are not limited. In addition to the names shown in FIG. 4 to FIG. 6, the devices and the links may further have other names. This is not limited.

During specific implementation, each terminal device, the access network device, and each network element in the core network shown in FIG. 4 to FIG. 6 may have a composition structure shown in FIG. 7, or include components shown in FIG. 7. FIG. 7 is a diagram of composition of a communication apparatus 700 according to an embodiment of this application. The communication apparatus 700 may be a terminal device, or a chip or a system on chip in the terminal device; or may be an access network device, or a chip or a system on chip in the access network device; or may be a core network device, or a chip or a system on chip in the core network device. As shown in FIG. 7, the communication apparatus 700 includes a processor 701, a transceiver 702, and a communication line 703.

Further, the communication apparatus 700 may further include a memory 704. The processor 701, the memory 704, and the transceiver 702 may be connected through the communication line 703.

The processor 701 is a central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. Alternatively, the processor 701 may be another apparatus having a processing function, for example, a circuit, a component, or a software module. This is not limited.

The transceiver 702 is configured to communicate with another device or another communication network. The another communication network may be the Ethernet, a radio access network (radio access network, RAN), a wireless local area network (wireless local area networks, WLAN), or the like. The transceiver 702 may be a module, a circuit, a transceiver, or any apparatus that can implement communication.

The communication line 703 is configured to transmit information between the components included in the communication apparatus 700.

The memory 704 is configured to store instructions. The instructions may be a computer program.

The memory 704 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or the like. This is not limited.

It should be noted that the memory 704 may be independent of the processor 701, or may be integrated with the processor 701. The memory 704 may be configured to store instructions, program code, some data, or the like. The memory 704 may be located inside the communication apparatus 700, or may be located outside the communication apparatus 700. This is not limited. The processor 701 is configured to execute the instructions stored in the memory 704, to implement a sensing measurement method provided in the following embodiments of this application.

In an example, the processor 701 may include one or more CPUs, for example, a CPU 0 and a CPU 1 in FIG. 7.

In an optional implementation, the communication apparatus 700 includes a plurality of processors. For example, in addition to the processor 701 in FIG. 7, the communication apparatus 700 may further include a processor 707.

In an optional implementation, the communication apparatus 700 further includes an output device 705 and an input device 706. For example, the input device 706 is a device, for example, a keyboard, a mouse, a microphone, or a joystick, and the output device 705 is a device, for example, a display or a speaker (speaker).

It should be noted that the communication apparatus 700 may be a desktop computer, a portable computer, a network server, a mobile phone, a tablet computer, a wireless terminal, an embedded device, a chip system, or a device having a structure similar to a structure in FIG. 7. In addition, the composition structure shown in FIG. 6 does not constitute a limitation on the communication apparatus. In addition to the components shown in FIG. 7, the communication apparatus may include more or fewer components than those shown in the figure, some components may be combined, or different component arrangements may be used.

In embodiments of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

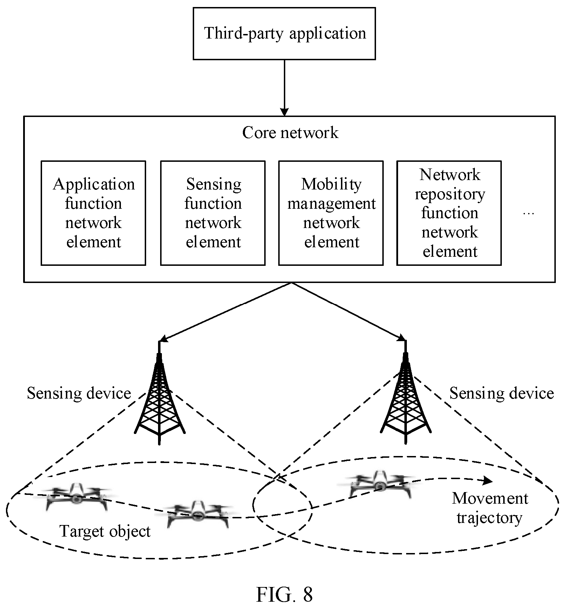

With reference to the communication system shown in FIG. 4, FIG. 5, or FIG. 6, as shown in FIG. 8, a third-party application may send a sensing service request to a core network (for example, an application function network element), and the core network (for example, a sensing function network element, a network repository function network element, or a mobility management network element) selects a proper sensing device to perform sensing measurement on a target object, to implement service continuity.

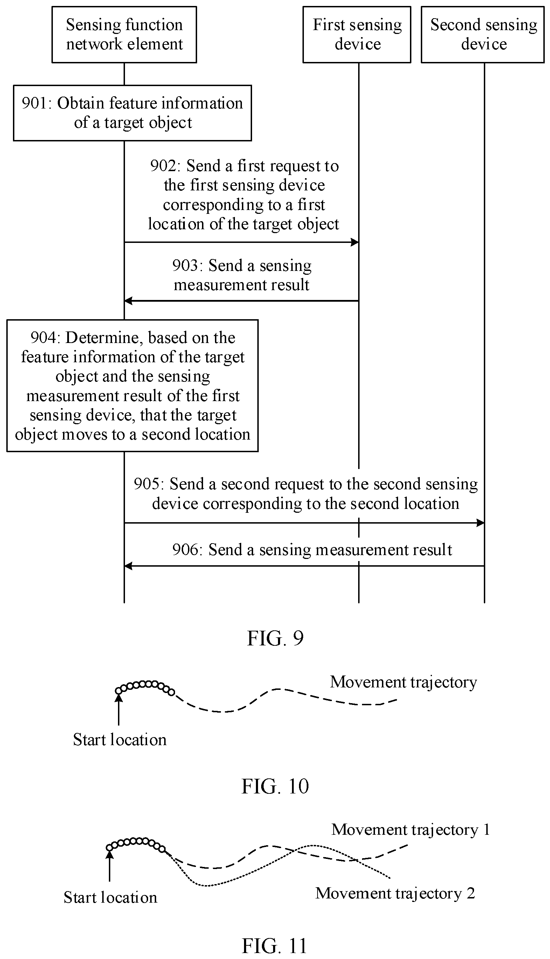

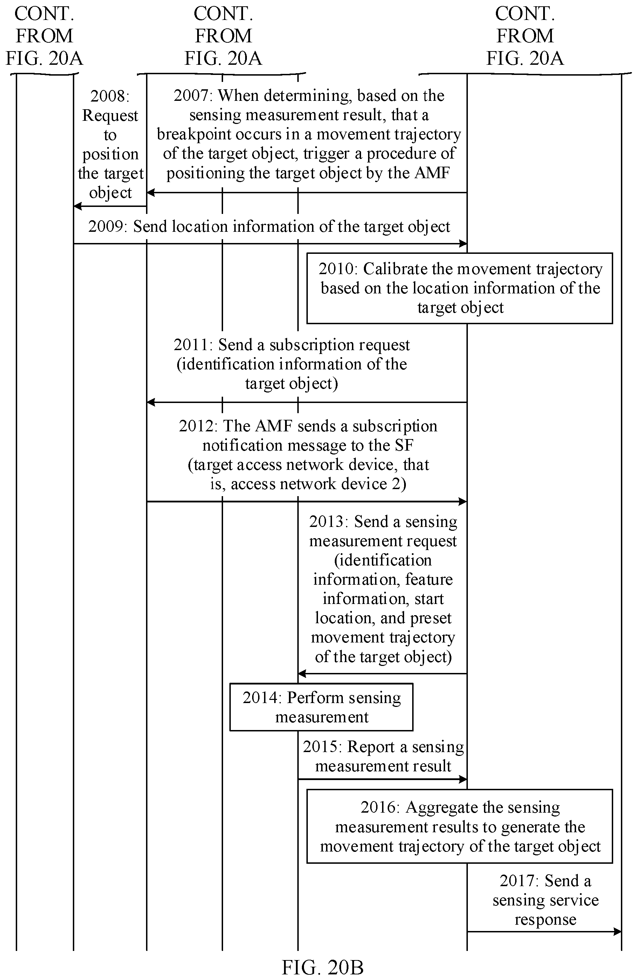

Specifically, with reference to FIG. 9 to FIG. 20A and FIG. 20B, the sensing measurement method provided in embodiments of this application may be described in detail. Each network element in a core network and a sensing device (which for example, may be an access network device or a terminal device having a sensing function) in the following embodiments may have the components shown in FIG. 7. Processing performed by a single execution entity shown in embodiments of this application may alternatively be performed by a plurality of execution entities. These execution entities may be logically and/or physically separated. This is not limited.

FIG. 9 is a flowchart of a sensing measurement method according to an embodiment of this application. As shown in FIG. 9, the method may include the following steps.

Step 901: A sensing function network element obtains feature information of a target object.

The feature information of the target object may include one or more of the following: a shape of the target object, a volume of the target object, and a size of the target object.

Optionally, the sensing function network element may obtain the feature information of the target object from an application function network element or a mobility management network element.

The application function network element may send the feature information of the target object to the sensing function network element. Alternatively, the application function network element may send the feature information of the target object and a first location of the target object to a network exposure network element. The network exposure network element selects, based on the first location of the target object, a mobility management network element whose coverage area can include the first location, and then sends the feature information of the target object to the mobility management network element. The mobility management network element sends the feature information of the target object to the sensing function network element.

Optionally, the application function network element may include the feature information of the target object in a third request and send the third request to the sensing function network element, or may send the third request to the sensing function network element via the network exposure network element and the mobility management network element.

The third request may also be referred to as a sensing service request. The third request may be used to request to obtain a movement trajectory of the target object, or the third request may be used to request to sense the target object.

Optionally, the third request may further include one or more of the following: the first location of the target object, a start moment of sensing measurement, an end moment of sensing measurement, and a preset movement trajectory of the target object.

Optionally, before the sensing function network element obtains the feature information of the target object, the application function network element may further send a fifth request to the sensing function network element, to request to perform sensing measurement on a first area. The fifth request may include area information of the first area. The sensing function network element may send, based on the fifth request, a sixth request to a sensing device corresponding to the first area, to request to perform sensing measurement. The sensing device may perform sensing measurement on the first area based on the sixth request, and send a sensing measurement result to the sensing function network element, and the sensing function network element sends the sensing measurement result corresponding to the first area to the application function network element. The application function network element may determine, based on the sensing measurement result of the first area, one or more of the following information about a target object on which sensing measurement needs to be performed in the first area: feature information of the target object and a first location of the target object. Further, the application function network element may send the third request to the sensing function network element, or send the third request to the sensing function network element via the mobility management network element.

The sensing device in this embodiment of this application may be a device having a sensing function, for example, may be an access network device having a sensing function, or may be a terminal device having a sensing function. This is not limited.

The sensing device may report device information of the sensing device to a core network. When sensing measurement needs to be performed, a network element in the core network may select, based on device information of each sensing device, a proper sensing device to perform sensing measurement.

The device information of the sensing device may include identification information of the sensing device and sensing area information of the sensing device. Optionally, location information of the sensing device may be further included. The location information of the sensing device and the sensing area information of the sensing device may also be collectively referred to as a sensing capability of the sensing device.

For example, in an implementation method, the sensing device may register the device information of the sensing device with a network repository function network element (for example, an NRF). For example, if the sensing device may directly communicate with the network repository function network element, the sensing device may register the device information of the sensing device with the network repository function network element; or if the sensing device cannot directly communicate with the network repository function network element, the sensing device may register the device information of the sensing device with the network repository function network element via the mobility management network element. Alternatively, in another implementation method, the sensing device may send the device information to the sensing function network element. For example, if the sensing device may directly communicate with the sensing function network element, the sensing device may send the device information of the sensing device to the sensing function network element; or if the sensing device cannot directly communicate with the sensing function network element, the sensing device may send the device information of the sensing device to the sensing function network element via the mobility management network element.

When sensing measurement needs to be performed on the first area, the sensing function network element may send a fourth request to the network repository function network element, to request to discover a sensing device. The fourth request may include the area information of the first area. The network repository function network element may determine, based on the area information of the first area and the device information of each sensing device, the sensing device corresponding to the first area, and indicate the sensing device to the sensing function network element by using a fourth response. The sensing function network element may determine, based on the fourth response, the sensing device corresponding to the first area. Alternatively, the sensing function network element may determine, based on the area information of the first area and the received device information of each sensing device, the sensing device corresponding to the first area. Further, the application function network element may determine the target object based on the sensing measurement result corresponding to the first area.

Step 902: The sensing function network element sends a first request to a first sensing device corresponding to the first location of the target object. Correspondingly, the first sensing device receives the first request from the sensing function network element.

The first request may be used to request to perform sensing measurement.

When the third request includes the first location of the target object, the sensing function network element may determine the first sensing device based on the first location. Alternatively, when the third request includes the preset movement trajectory of the target object, the sensing function network element may determine the first location based on the preset movement trajectory (for example, determine a start location of the preset movement trajectory as the first location, or determine a location corresponding to a current moment in the preset movement trajectory as the first location), and then determine the first sensing device based on the first location. Alternatively, the sensing function network element determines, based on the obtained sensing measurement result, that the target object is at the first location, and determines the first sensing device based on the first location. A sensing area of the first sensing device can cover the first location.

In a possible design, the sensing function network element may send a fourth request to the network repository function network element, to request to discover a sensing device. The fourth request may include the first location and/or the preset movement trajectory. The network repository function network element may determine, based on the first location and/or the preset movement trajectory and the device information of each sensing device, one or more sensing devices whose sensing area can cover the first location and/or the preset movement trajectory, and send identification information of the one or more determined sensing devices and sensing area information of each sensing device to the sensing function network element by using a fourth response. The sensing function network element selects one sensing device from the one or more sensing devices as the first sensing device based on the first location and the fourth response.

In another possible design, the sensing function directly receives identification information of one or more sensing devices and sensing area information of each sensing device from the mobility management network element; or the sensing function sends, to the mobility management network element, a request or a subscription message used to obtain information about a sensing device, and the mobility management network element sends the identification information and the sensing area information of the one or more sensing devices to the sensing function in response to the request or the subscription message. The sensing function network element selects one sensing device from the one or more sensing devices as the first sensing device based on the first location and the sensing area information of the one or more sensing devices.

Optionally, the first request may further include one or more of the following: the feature information of the target object, the first location, and first indication information. The first indication information indicates to activate sensing measurement in all sensing areas of a sensing device.

The sensing function network element may include the feature information of the target object and/or the first location in the first request sent to the first sensing device, to indicate the first sensing device to sense only the target object, thereby reducing power consumption caused by sensing. Alternatively, the sensing function network element may include the first indication information in the first request sent to the first sensing device, to indicate the first sensing device to activate sensing measurement in all sensing areas of the first sensing device, thereby improving accuracy of the sensing measurement result.

Step 903: The first sensing device sends a sensing measurement result to the sensing function network element. Correspondingly, the sensing function network element receives the sensing measurement result from the first sensing device.

The first sensing device may perform sensing measurement based on the first request sent by the sensing function network element, obtain the sensing measurement result, and send the sensing measurement result to the sensing function network element. It may be understood that the sensing measurement result may be specifically point cloud data obtained based on a received echo signal, or may be a result of performing calculation or processing based on point cloud data. A specific representation form of the sensing measurement result is not limited in embodiments of this application.

Optionally, the sensing function network element may further send second indication information to the first sensing device, where the second indication information indicates to stop sensing measurement. The first sensing device stops sensing measurement based on the second indication information.

For example, the sensing function network element may send the second indication information to the first sensing device when determining, based on the sensing measurement result of the first sensing device and sensing area information of the first sensing device, that the target object leaves the sensing area of the first sensing device.

For another example, the sensing function network element may alternatively predict the movement trajectory of the target object based on the sensing measurement result of the first sensing device. The sensing function network element may send the second indication information to the first sensing device when determining, based on a predicted result, that the target object is to leave the sensing area of the first sensing device.

Step 904: The sensing function network element determines, based on the feature information of the target object and the sensing measurement result of the first sensing device, that the target object moves to a second location.

The second location may be a location, in the movement trajectory of the target object, in a sensing overlapping area between the first sensing device and one or more other sensing devices. When the target object moves to the second location, the target object may subsequently move out of the sensing area of the first sensing device, and another sensing device (for example, the following second sensing device) may be required to continue sensing the target object. In this case, the sensing function network element needs to determine a specific sensing device that continues sensing the target object, that is, needs to determine the second sensing device.

In a possible design, when the sensing measurement result of the first sensing device is a sensing measurement result of the target object, the sensing function network element may determine, based on the sensing measurement result, a location to which the target object continuously moves, for example, determine that the target object moves to the second location.

In another possible design, when the sensing measurement result of the first sensing device is a sensing measurement result of all the sensing areas of the first sensing device, the sensing function network element may determine a sensing measurement result of the target object from the sensing measurement result based on the feature information of the target object, and then determine, based on the sensing measurement result of the target object, a location to which the target object continuously moves, for example, determine that the target object moves to the second location.

In still another possible design, the sensing function network element may alternatively determine the second location based on the preset movement trajectory of the target object, and determine, based on the sensing measurement result of the first sensing device, whether the target object moves to the second location.

In an actual communication scenario, an actual movement trajectory of the target object may deviate from the preset movement trajectory. When the target object moves to a location near the second location, it may also be considered that the target object moves to the second location.

Step 905: The sensing function network element sends a second request to the second sensing device corresponding to the second location. Correspondingly, the second sensing device receives the second request from the sensing function network element.

When the sensing function network element determines that the target object moves to the second location, the sensing function network element may determine the second sensing device based on the second location, and send the second request to the second sensing device, to request the second sensing device to perform sensing measurement.

In a possible design, the sensing function network element may send a fourth request to the network repository function network element, to request to discover a sensing device. The fourth request may include the second location. The network repository function network element may determine, based on the second location and the device information of each sensing device, one or more sensing devices corresponding to the second location, and send, to the sensing function network element by using a fourth response, identification information of the one or more sensing devices corresponding to the second location and sensing area information of each sensing device. The sensing function network element selects one sensing device from the one or more sensing devices as the second sensing device based on the fourth response.

In another possible design, the sensing function network element may determine, based on the second location and the received device information of each sensing device, the second sensing device corresponding to the second location.

Optionally, when determining the second sensing device, the sensing function network element may further predict the movement trajectory of the target object based on the sensing measurement result of the first sensing device, to obtain a predicted result; and determine the second sensing device based on the predicted result and the sensing area information of each sensing device.

Optionally, the second request sent by the sensing function network element to the second sensing device may further include one or more of the following: the feature information of the target object, the second location, and the first indication information. The first indication information indicates to activate sensing measurement in all the sensing areas of the sensing device.

The sensing function network element may include the feature information of the target object and/or the second location in the second request sent to the second sensing device, to indicate the second sensing device to sense only the target object, thereby reducing power consumption caused by sensing. Alternatively, the sensing function network element may include the first indication information in the second request sent to the second sensing device, to indicate the second sensing device to activate sensing measurement in all sensing areas of the second sensing device, thereby improving accuracy of the sensing measurement result.

Optionally, the sensing function network element may further send the second request to the second sensing device when determining, based on the feature information of the target object, the sensing measurement result of the first sensing device, and sensing area information of the second sensing device, that the target object enters a sensing area of the second sensing device.

Step 906: The second sensing device sends a sensing measurement result to the sensing function network element. Correspondingly, the sensing function network element receives the sensing measurement result from the second sensing device.

The second sensing device may perform sensing measurement based on the second request sent by the sensing function network element, obtain the sensing measurement result, and send the sensing measurement result to the sensing function network element.

Optionally, the sensing function network element may further send second indication information to the second sensing device, where the second indication information indicates to stop sensing measurement. The second sensing device stops sensing measurement based on the second indication information.

For example, the sensing function network element may send the second indication information to the second sensing device when determining, based on the sensing measurement result of the second sensing device and the sensing area information of the second sensing device, that the target object leaves the sensing area of the second sensing device.

For another example, the sensing function network element may alternatively predict the movement trajectory of the target object based on the received sensing measurement result. The sensing function network element may send the second indication information to the second sensing device when determining, based on a predicted result, that the target object is to leave the sensing area of the second sensing device.

In the method shown in FIG. 9, a sensing measurement process of the target object is described by using an example in which sensing devices corresponding to the target object in a moving process include the first sensing device and the second sensing device and the first sensing device is a start sensing device (that is, a 1^{st} sensing device corresponding to the target object in the moving process). In an actual communication process, the target object may correspond to a plurality of sensing devices in the moving process. For descriptions of sensing measurement of a start sensing device in the plurality of sensing devices, refer to the foregoing related descriptions of the first sensing device. For descriptions of sensing measurement of another sensing device in the plurality of sensing devices, refer to the foregoing related descriptions of the second sensing device. Details are not described again.

Optionally, the start sensing device may not be the first sensing device. For example, before moving to the sensing area of the first sensing device, the target object may further move in a sensing area of a third sensing device, and the third sensing device may be considered as the start sensing device.

In this case, the third request sent by the application function network element to the sensing function network element carries a third location instead of the first location. In other words, the third request carries a start location (which may also be referred to as an initial location) of the target object. The sensing function network element may determine the third sensing device based on the third location with reference to the foregoing manner of determining the first sensing device based on the first location, and send an eleventh request to the third sensing device. The third sensing device performs sensing measurement on the target object based on the eleventh request, and sends a sensing measurement result to the sensing function network element. When determining, based on the feature information of the target object and the sensing measurement result of the third sensing device, that the target object moves to the first location, the sensing function network element sends the first request to the first sensing device corresponding to the first location, and the first sensing device continues to perform sensing measurement on the target object.

The eleventh request may be used to request to perform sensing measurement. Optionally, the eleventh request may further include one or more of the following: the feature information of the target object, the third location, and the first indication information.

For descriptions of determining, by the sensing function network element based on the feature information of the target object and the sensing measurement result of the third sensing device, that the target object moves to the first location, refer to the related descriptions of determining, by the sensing function network element based on the feature information of the target object and the sensing measurement result of the first sensing device, that the target object moves to the second location in step 904. Details are not described again.

Based on the method shown in FIG. 9, the target object does not participate in the sensing measurement process, and the target object may have no 3GPP UE identification information. The sensing function network element may determine, based on assistance information such as the feature information of the target object and the first location provided by the application function network element, a specific target object on which sensing measurement needs to be performed, and further dynamically select a proper sensing device based on a location of the target object in the moving process, or select a proper sensing device based on the preset movement trajectory, for example, select the first sensing device based on the first location and select the second sensing device based on the second location, and dynamically configure/activate sensing measurement operations of the first sensing device and the second sensing device by using the first request and the second request, to ensure that the target object is always in a sensing area of the sensing device in the moving process, so that continuous sensing of the target object is implemented, and continuity of a sensing service is ensured.

Based on the method shown in FIG. 9, the sensing function network element may further determine the movement trajectory of the target object based on the sensing measurement result of the first sensing device and the second sensing measurement result. The sensing function network element may further send the movement trajectory of the target object to the application function network element.

When the sensing measurement results of the first sensing device and the second sensing device are sensing measurement results of the target object, the sensing function network element may aggregate the sensing measurement results to determine a continuous movement trajectory of the target object. Alternatively, when the sensing measurement results of the first sensing device and the second sensing device are sensing measurement results of all sensing areas of the corresponding sensing devices, the sensing function network element may determine sensing measurement results of the target object from the sensing measurement results based on the feature information of the target object, and then aggregate the sensing measurement results of the target object, to determine the movement trajectory of the target object.

Optionally, if the sensing measurement result received by the sensing function network element indicates that there are a plurality of target objects (the plurality of target objects have same feature information), the sensing function network element may further select, from the plurality of target objects based on start locations of the target objects, a target object whose movement trajectory needs to be generated, and then generate the movement trajectory of the target object.

Optionally, if the sensing measurement result received by the sensing function network element indicates that there are a plurality of target objects at a start location (the plurality of target objects have same feature information and a same start location), after a period of time, the plurality of target objects are separated, and there are a plurality of movement trajectories. The sensing function network element may select, from the plurality of target objects based on location information that is of a target object whose movement trajectory needs to be generated and that is sent by the application function network element, the target object whose movement trajectory needs to be generated, and then determine the movement trajectory of the target object from the plurality of movement trajectories. Alternatively, the sensing function network element may send the plurality of movement trajectories to the application function network element, and the application function network element or a third-party application selects a movement trajectory of a target object from the plurality of movement trajectories based on location information of the target object whose movement trajectory needs to be generated.

The application function network element may obtain the location information of the target object based on another technical means. For example, in the moving process of the target object, an application layer periodically sends a current location of the target object to the application function network element or the third-party application, or in the moving process of the target object, the application function network element or the third-party application obtains current location information of the target object from a sensing device such as a camera/radar.

For example, as shown in FIG. 10, the sensing function network element may determine the movement trajectory of the target object based on the feature information of the target object and the start location of the target object. As shown in FIG. 11, when there are a plurality of target objects at a start location, after a period of time, the plurality of target objects are separated, and there are a plurality of movement trajectories. The sensing function network element, the application function network element, or the third-party application may determine a movement trajectory of a target object based on location information of the target object whose movement trajectory needs to be generated.

Optionally, the sensing function network element may include the movement trajectory of the target object in a third response and send the third response to the application function network element.

Optionally, before the sensing function network element sends the movement trajectory of the target object to the application function network element, the sensing function network element may further calibrate the movement trajectory of the target object based on the location information of the target object sent by the application function network element, and send a calibrated movement trajectory to the application function network element. Alternatively, the sensing function network element may calibrate the movement trajectory of the target object based on the preset movement trajectory of the target object, and send a calibrated movement trajectory to the application function network element.

Optionally, when receiving the movement trajectory of the target object sent by the sensing function network element, the application function network element may alternatively calibrate the movement trajectory of the target object based on one or more of the following: the feature information of the target object, the preset movement trajectory of the target object, and the location information of the target object.

Optionally, the sensing function network element may also calibrate the second location based on the location information of the target object sent by the application function network element. In other words, the sensing function network element searches the sensing measurement result for the target object based on the feature information, and then determines the second location of the target object. When the location information provided by the application function network element is introduced, the sensing function network element may more accurately search for the target object, to calibrate the second location.

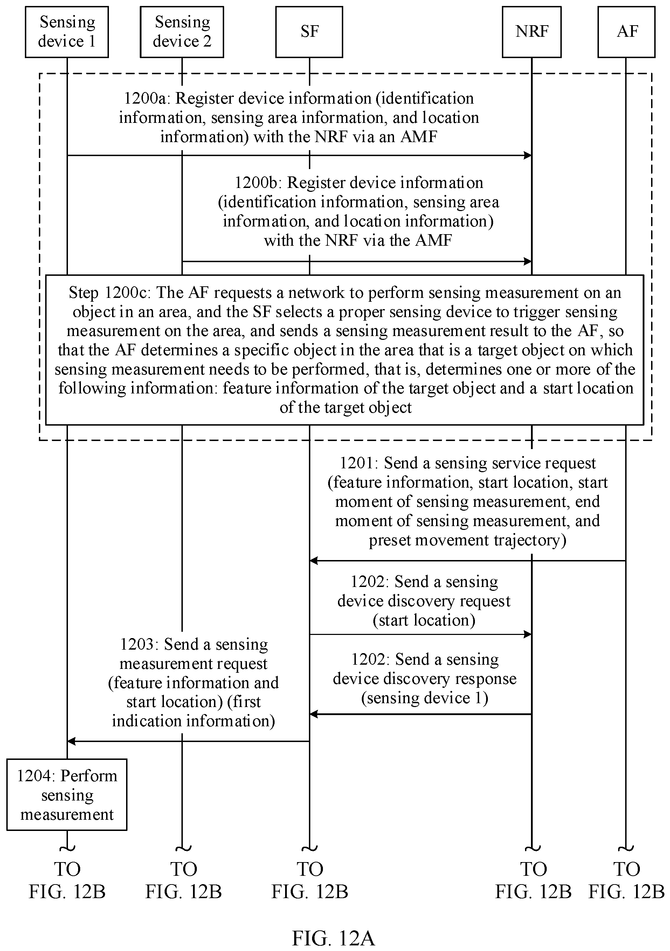

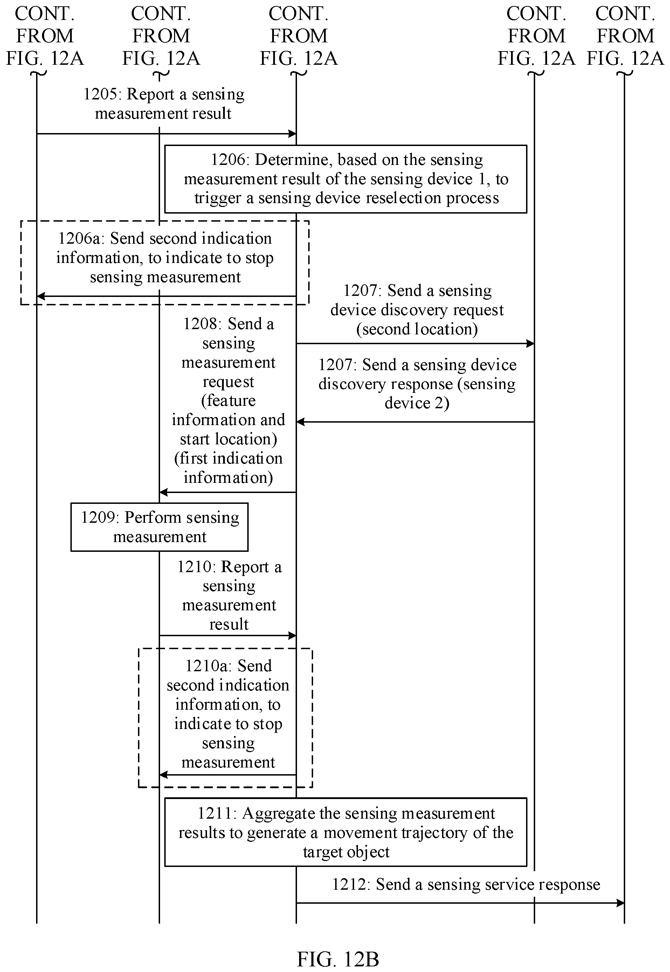

Based on the foregoing descriptions, the following uses an example in which an application function network element is an AF, a sensing function network element is an SF, a network repository function network element is an NRF, and sensing devices corresponding to a target object in a moving process include a sensing device 1 and a sensing device 2. Refer to FIG. 12A and FIG. 12B. The sensing measurement method shown in FIG. 9 is described by using an example.

FIG. 12A and FIG. 12B are a flowchart of a sensing measurement method according to an embodiment of this application. As shown in FIG. 12A and FIG. 12B, the sensing measurement method may include the following steps.

Step 1201: An AF sends a sensing service request to an SF. Correspondingly, the SF receives the sensing service request from the AF.

The sensing service request may include one or more of the following: feature information of a target object, a start location of the target object, a start moment of sensing measurement, an end moment of sensing measurement, and a preset movement trajectory of the target object. For descriptions of the sensing service request, refer to the related descriptions of the third request in step 901. Details are not described again.

Optionally, before the AF sends the sensing service request to the SF, the AF may determine the feature information of the target object and the start location of the target object based on step 1200c.

In step 1200c, before performing sensing measurement on the target object, the AF may request a network to perform sensing measurement on an object in an area (for example, send a fifth request including area information of a first area to the SF, to request to perform sensing measurement on the first area). The SF selects a proper sensing device to trigger sensing measurement on the area, and sends a sensing measurement result to the AF, so that the AF determines a specific object in the area that is the target object on which sensing measurement needs to be performed, that is, determines one or more of the following information of the target object: the feature information of the target object and the start location of the target object.

Optionally, the sensing device may register device information of the sensing device with an NRF via an AMF based on step 1200a and step 1200b. Alternatively, the sensing device may send device information to the SF via an AMF.

When sensing measurement needs to be performed on an object in an area, the SF may send a sensing device discovery request to the NRF, to request to discover a sensing device. The request may carry area information of the area. The NRF may determine, based on the received sensing device discovery request and device information of each sensing device, a sensing device corresponding to the area, and indicate the sensing device to the SF by using a sensing device discovery response. The SF may determine, based on the sensing device discovery response, the sensing device corresponding to the area, to trigger sensing measurement. Alternatively, the SF may determine, based on the area information of the area and received device information of each sensing device, a sensing device corresponding to the area, to trigger sensing measurement.

The device information of the sensing device may include identification information of the sensing device and sensing area information of the sensing device. Optionally, location information of the sensing device may be further included. The location information of the sensing device and the sensing area information of the sensing device may also be collectively referred to as a sensing capability of the sensing device.

For descriptions of the sensing device discovery request and the sensing device discovery response, refer to the related descriptions of the fourth request and the fourth response in step 901. Details are not described again.

Step 1202: The SF sends a sensing device discovery request to the NRF, and the NRF sends a sensing device discovery response to the SF. Correspondingly, the NRF receives the sensing device discovery request from the SF, and the SF receives the sensing device discovery response from the NRF.

The sensing device discovery request may include the start location of the target object. The NRF may determine, based on the start location and the device information of each sensing device, a sensing device 1 corresponding to the start location, and send identification information of the sensing device 1 to the SF by using the sensing device discovery response. The NRF may further send sensing area information of the sensing device 1 to the SF by using the sensing device discovery response.

For descriptions of the start location, the sensing device discovery request, and the sensing device discovery response, refer to the related descriptions of the first location, the fourth request, and the fourth response in step 902. Details are not described again.

Step 1203: The SF sends a sensing measurement request to the sensing device 1. Correspondingly, the sensing device 1 receives the sensing measurement request from the SF.

The sensing measurement request may include the feature information of the target object and the start location of the target object. Alternatively, the sensing measurement request may include first indication information, where the first indication information indicates to activate sensing measurement in all sensing areas of a sensing device. For descriptions of the sensing measurement request, refer to the related descriptions of the first request sent to the first sensing device in step 902. Details are not described again.

Step 1204: The sensing device 1 performs sensing measurement.

Step 1205: The sensing device 1 reports a sensing measurement result to the SF. Correspondingly, the SF receives the sensing measurement result from the sensing device 1.

For descriptions of the step, refer to the related descriptions of step 903. Details are not described again.

Step 1206: The SF determines, based on the sensing measurement result of the sensing device 1, to trigger a sensing device reselection process.

The SF may determine a movement trajectory of the target object from the sensing measurement result of the sensing device 1 based on the feature information of the target object and/or the start location of the target object. When the target object leaves or is to leave a sensing area of the sensing device 1, the SF may trigger the sensing device reselection process.

Optionally, as shown in step 1206a, the SF may further send second indication information to the sensing device 1, to indicate the sensing device 1 to stop performing sensing measurement.

Step 1207: The SF sends a sensing device sending request to the NRF, and the NRF sends a sensing device discovery response to the SF. Correspondingly, the NRF receives the sensing device sending request from the SF, and the SF receives the sensing device discovery response from the NRF.

The sensing device discovery request may include a second location of the target object. The NRF may determine, based on the second location and the device information of each sensing device, a sensing device 2 corresponding to the second location, and send identification information of the sensing device 2 to the SF by using the sensing device discovery response. The NRF may further send sensing area information of the sensing device 2 to the SF by using the sensing device discovery response.

For descriptions of the second location, the sensing device discovery request, and the sensing device discovery response, refer to the related descriptions of the second location, the fourth request, and the fourth response in step 904 and step 905. Details are not described again.

Step 1208: The SF sends a sensing measurement request to the sensing device 2. Correspondingly, the sensing device 2 receives the sensing measurement request from the SF.

The sensing measurement request may include the feature information of the target object and the second location of the target object. Alternatively, the sensing measurement request may include first indication information, where the first indication information indicates to activate sensing measurement in all sensing areas of a sensing device. For descriptions of the sensing measurement request, refer to the related descriptions of the second request sent to the second sensing device in step 905. Details are not described again.

Step 1209: The sensing device 2 performs sensing measurement.

Step 1210: The sensing device 2 reports a sensing measurement result to the SF. Correspondingly, the SF receives the sensing measurement result from the sensing device 2.

For descriptions of the step, refer to the related descriptions of step 906. Details are not described again.

Optionally, as shown in step 1210a, the SF may further send second indication information to the sensing device 2, to indicate the sensing device 2 to stop performing sensing measurement.

Step 1211: The SF aggregates the sensing measurement results to generate the movement trajectory of the target object.

Step 1212: The SF sends a sensing service response to the AF. Correspondingly, the AF receives the sensing service response from the SF.

The sensing service response includes the movement trajectory of the target object. For the sensing service response, refer to the foregoing descriptions of the third response. Details are not described again. For descriptions of step 1211 and step 1212, refer to the related descriptions of sending, by the sensing function network element, the movement trajectory of the target object to the application function network element. Details are not described again.

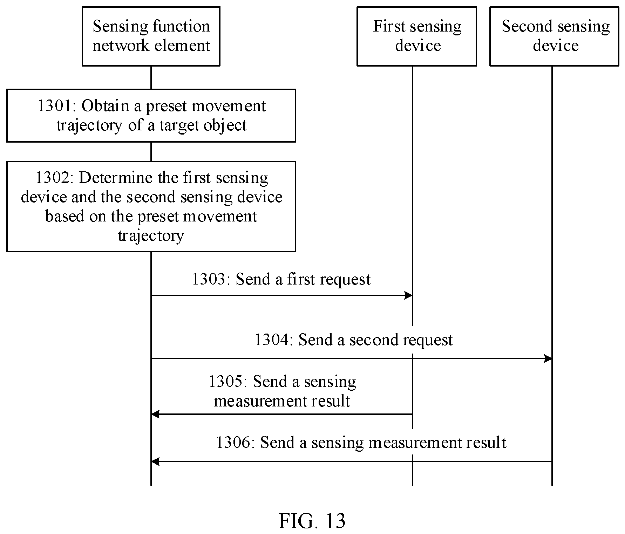

Different from descriptions that in FIG. 9 to FIG. 12A and FIG. 12B, the sensing function network element determines, based on the sensing measurement result or the preset movement trajectory of the target object, that a terminal device moves to a location, and sends a request used to request to perform sensing measurement to a sensing device corresponding to the location, as shown in FIG. 13, the sensing function network element may alternatively determine, based on the preset movement trajectory of the target object, a plurality of sensing devices (for example, the first sensing device and the second sensing device), and send a request used to request to perform sensing measurement to the plurality of sensing devices, to implement sensing measurement on the target object.

FIG. 13 is a flowchart of a sensing measurement method according to an embodiment of this application. As shown in FIG. 13, the method may include the following steps.

Step 1301: A sensing function network element obtains a preset movement trajectory of a target object.

Optionally, the sensing function network element may obtain the preset movement trajectory of the target object from an application function network element or a mobility management network element.

The application function network element may send the preset movement trajectory of the target object to the sensing function network element. Alternatively, the application function network element may send the preset movement trajectory of the target object and a first location of the target object to a network exposure network element. The network exposure network element selects, based on the first location of the target object, a mobility management network element whose coverage area can include the first location, and then sends the preset movement trajectory of the target object to the mobility management network element. The mobility management network element sends the preset movement trajectory of the target object to the sensing function network element.

Optionally, the application function network element may include the preset movement trajectory of the target object in a third request and send the third request to the sensing function network element, or may send the third request to the sensing function network element via the network exposure network element and the mobility management network element.

The third request may be used to request to obtain a movement trajectory of the target object. The third request may also be referred to as a sensing service request.

Optionally, the third request may further include one or more of the following: feature information of the target object, the first location of the target object, a start moment of sensing measurement, and an end moment of sensing measurement. For descriptions of the feature information of the target object and the first location of the target object, refer to the related descriptions in FIG. 9. Details are not described again.

Optionally, before the sensing function network element obtains the feature information of the target object, the application function network element may further send a fifth request to the sensing function network element, to request to perform sensing measurement on a first area. The fifth request may include area information of the first area. The sensing function network element may send, based on the fifth request, a sixth request to a sensing device corresponding to the first area, to request to perform sensing measurement. The sensing device may perform sensing measurement on the first area based on the sixth request, and send a sensing measurement result to the sensing function network element, and the sensing function network element sends the sensing measurement result corresponding to the first area to the application function network element. The application function network element may determine, based on the sensing measurement result of the first area, one or more of the following information about a target object on which sensing measurement needs to be performed in the first area: feature information of the target object and a first location of the target object. Further, the application function network element may send the third request to the sensing function network element, or send the third request to the sensing function network element via the mobility management network element.

For descriptions of the sensing device and device information, refer to the related descriptions in step 901. Details are not described again.

Step 1302: The sensing function network element determines a first sensing device and a second sensing device based on the preset movement trajectory.

Sensing areas of the first sensing device and the second sensing device cover the preset movement trajectory.

In a possible design, the sensing function network element may send a seventh request to a network repository function network element, to request to discover a sensing device. The seventh request may include the preset movement trajectory. The network repository function network element may determine, based on the preset movement trajectory and device information of each sensing device, the first sensing device and the second sensing device that correspond to the preset movement trajectory, and send identification information of the first sensing device and identification information of the second sensing device that correspond to the preset movement trajectory to the sensing function network element by using a seventh response. The seventh response may further include sensing area information of the first sensing device and the second sensing device. The sensing function network element may determine the first sensing device and the second sensing device based on the seventh response.

In another possible design, the sensing function network element may determine, based on the preset movement trajectory and device information that is sent by each sensing device, the first sensing device and the second sensing device that correspond to the preset movement trajectory.

Step 1303: The sensing function network element sends a first request to the first sensing device. Correspondingly, the first sensing device receives the first request from the sensing function network element.

The first request may be used to request to perform sensing measurement.

Optionally, the first request may include one or more of the following: the feature information of the target object and first indication information, where the first indication information indicates to activate sensing measurement in all sensing areas of a sensing device.

Optionally, the first request may further include the first location. When the third request includes the first location of the target object, the sensing function network element may determine the first location based on the third request. Alternatively, the sensing function network element may determine the first location based on the preset movement trajectory.

The sensing function network element may include the feature information of the target object and/or the first location in the first request, to indicate the first sensing device to sense only the target object, thereby reducing power consumption caused by sensing. Alternatively, the sensing function network element may include the first indication information in the first request, to indicate the first sensing device to activate sensing measurement in all the sensing areas of the sensing device, thereby improving accuracy of the sensing measurement result.

Step 1304: The sensing function network element sends a second request to the second sensing device. Correspondingly, the second sensing device receives the second request from the sensing function network element.

The second request may be used to request to perform sensing measurement.

Optionally, the second request may include one or more of the following: the feature information of the target object and first indication information, where the first indication information indicates to activate sensing measurement in all sensing areas of a sensing device.

Optionally, the second request may further include a second location. The sensing function network element may determine the second location based on the preset movement trajectory.

The sensing function network element may include the feature information of the target object and/or the second location in the second request, to indicate the second sensing device to sense only the target object, thereby reducing power consumption caused by sensing. Alternatively, the sensing function network element may include the first indication information in the second request, to indicate the second sensing device to activate sensing measurement in all sensing areas of the second sensing device, thereby improving accuracy of the sensing measurement result.

Optionally, the sensing function network element may simultaneously activate sensing measurement of the first sensing device and sensing measurement of the second sensing device by using the first request and the second request. Alternatively, the sensing function network element may first activate sensing measurement of the first sensing device by using the first request, and then activate sensing measurement of the second sensing device with reference to the movement trajectory of the target object.

For example, when determining, based on the feature information of the target object, the sensing measurement result of the sensing device, and the sensing area information of the sensing device, that the target object enters the sensing area of the second sensing device, the sensing function network element may send the second request to the second sensing device, to activate sensing measurement of the second sensing device.

Step 1305: The first sensing device sends a sensing measurement result to the sensing function network element. Correspondingly, the sensing function network element receives the sensing measurement result from the first sensing device.

The first sensing device may perform sensing measurement based on the first request sent by the sensing function network element, obtain the sensing measurement result, and send the sensing measurement result to the sensing function network element.

Optionally, the sensing function network element may further send second indication information to the first sensing device, where the second indication information indicates to stop sensing measurement. The first sensing device stops sensing measurement based on the second indication information.

For example, the sensing function network element may simultaneously send the second indication information to the first sensing device and the second sensing device when sensing measurement on the target object needs to be ended.

For another example, the sensing function network element may alternatively send the second indication information to the first sensing device when determining, based on the sensing measurement result of the first sensing device and the sensing area information of the first sensing device, that the target object leaves the sensing area of the first sensing device.

For another example, the sensing function network element may alternatively predict the movement trajectory of the target object based on the sensing measurement result of the first sensing device. The sensing function network element may send the second indication information to the first sensing device when determining, based on a predicted result, that the target object is to leave the sensing area of the first sensing device.

Step 1306: The second sensing device sends a sensing measurement result to the sensing function network element. Correspondingly, the sensing function network element receives the sensing measurement result from the second sensing device.

The second sensing device may perform sensing measurement based on the second request sent by the sensing function network element, obtain the sensing measurement result, and send the sensing measurement result to the sensing function network element.

Optionally, the sensing function network element may further send second indication information to the second sensing device, where the second indication information indicates to stop sensing measurement. The second sensing device stops sensing measurement based on the second indication information.

For example, the sensing function network element may simultaneously send the second indication information to the first sensing device and the second sensing device when sensing measurement on the target object needs to be ended.

For another example, the sensing function network element may alternatively send the second indication information to the second sensing device when determining, based on the sensing measurement result of the second sensing device and the sensing area information of the second sensing device, that the target object leaves the sensing area of the second sensing device.

For another example, the sensing function network element may alternatively predict the movement trajectory of the target object based on the sensing measurement result of the second sensing device. The sensing function network element may send the second indication information to the second sensing device when determining, based on a predicted result, that the target object is to leave the sensing area of the second sensing device.

Based on the method shown in FIG. 13, the target object does not participate in a sensing measurement process, and the target object may have no identification information. The sensing function network element may determine, based on assistance information such as the feature information of the target object and the first location provided by the application function network element, a specific target object on which sensing measurement needs to be performed, further select a plurality of proper sensing devices based on the preset movement trajectory of the target object, and dynamically configure/activate sensing measurement operations of the sensing devices by using requests (such as the first request and the second request) used to request to perform sensing measurement, to ensure that the target object is always in a sensing area of the sensing device in a moving process, so that continuous sensing of the target object is implemented, and continuity of a sensing service is ensured.

Based on the method shown in FIG. 13, the sensing function network element may further determine the movement trajectory of the target object based on sensing measurement results of a plurality of sensing devices. The sensing function network element may further send the movement trajectory of the target object to the application function network element.

For descriptions of determining, by the sensing function network element, the movement trajectory of the target object based on the sensing measurement results of the plurality of sensing devices and sending the movement trajectory to the application function network element, refer to the related descriptions of determining, by the sensing function network element, the movement trajectory of the target object based on the sensing measurement results of the first sensing device and the second sensing device and sending the movement trajectory to the application function network element. Details are not described again.

Optionally, when receiving the movement trajectory of the target object sent by the sensing function network element, the application function network element may alternatively calibrate the movement trajectory of the target object based on one or more of the following: the feature information of the target object, the preset movement trajectory of the target object, and the location information of the target object.

Optionally, the sensing function network element may also calibrate the second location based on the location information of the target object sent by the application function network element. In other words, the sensing function network element searches the sensing measurement result for the target object based on the feature information, and then determines the second location of the target object. When the location information provided by the application function network element is introduced, the sensing function network element may more accurately search for the target object, to calibrate the second location.

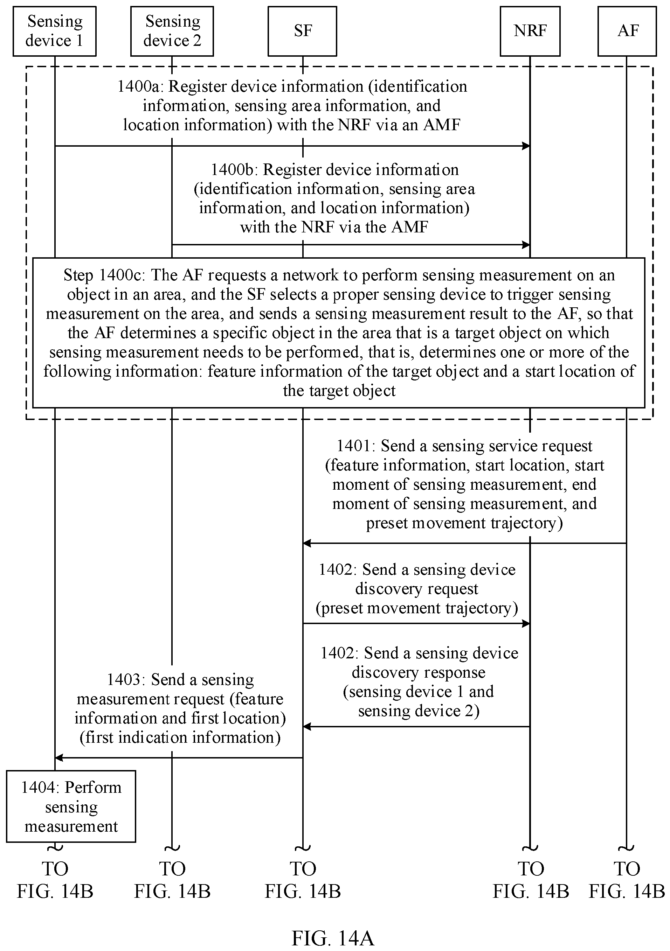

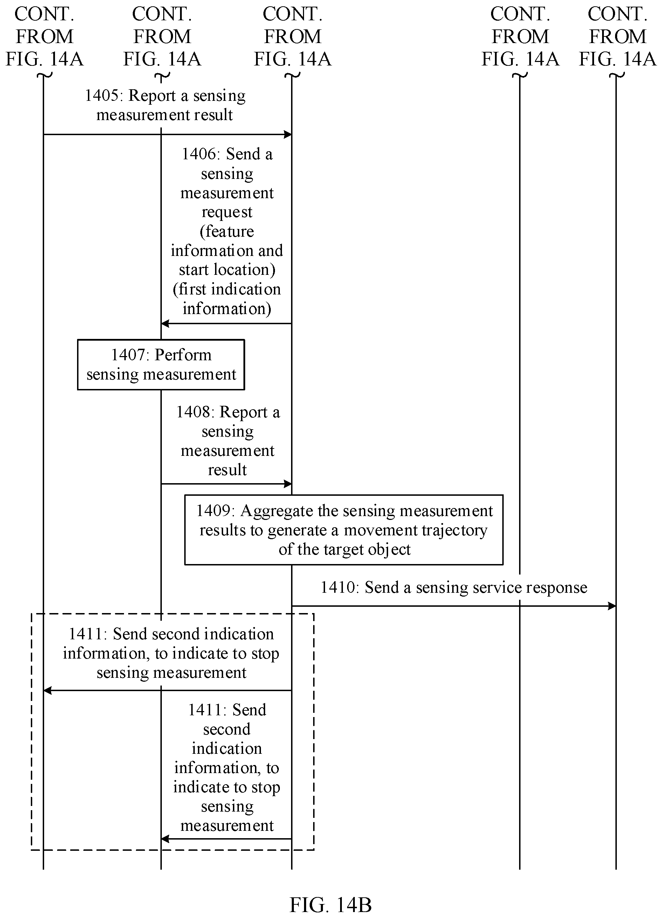

Based on the foregoing descriptions, the following uses an example in which an application function network element is an AF, a sensing function network element is an SF, a network repository function network element is an NRF, and sensing devices corresponding to a target object in a moving process include a sensing device 1 and a sensing device 2. Refer to FIG. 14A and FIG. 14B. The sensing measurement method shown in FIG. 13 is described by using an example.

FIG. 14A and FIG. 14B are a flowchart of a sensing measurement method according to an embodiment of this application. As shown in FIG. 14A and FIG. 14B, the sensing measurement method may include the following steps.

Step 1401: An AF sends a sensing service request to an SF. Correspondingly, the SF receives the sensing service request from the AF.

The sensing service request may include one or more of the following: feature information of a target object, a start location of the target object, a start moment of sensing measurement, an end moment of sensing measurement, and a preset movement trajectory of the target object. For descriptions of the sensing service request, refer to the related descriptions of the third request in step 1301. Details are not described again.

Optionally, before the AF sends the sensing service request to the SF, the AF may determine the feature information of the target object and the start location of the target object based on step 1400c.

Optionally, the sensing device may register device information of the sensing device with an NRF via an AMF based on step 1400a and step 1400b. Alternatively, the sensing device may send device information to the SF via an AMF.

For descriptions of steps 1400a, 1400b, and 1400c, refer to the related descriptions of steps 1200a, 1200b, and 1200c in step 1201. Details are not described again.

Step 1402: The SF sends a sensing device discovery request to the NRF, and the NRF sends a sensing device discovery response to the SF. Correspondingly, the NRF receives the sensing device discovery request from the SF, and the SF receives the sensing device discovery response from the NRF.

The sensing device discovery request may include the preset movement trajectory of the target object. The NRF may determine, based on the preset movement trajectory and device information of each sensing device, a sensing device 1 and a sensing device 2 that correspond to the preset movement trajectory, and send identification information of the sensing device 1 and the sensing device 2 to the SF by using the sensing device discovery response. The NRF may further send sensing area information of the sensing device 1 and the sensing device 2 to the SF by using the sensing device discovery response.

For descriptions of the sensing device discovery request and the sensing device discovery response, refer to the related descriptions of the seventh request and the seventh response in step 1302. Details are not described again.

Step 1403: The SF sends a sensing measurement request to the sensing device 1. Correspondingly, the sensing device 1 receives the sensing measurement request from the SF.

The sensing measurement request may include the feature information of the target object and/or a first location. Alternatively, the sensing measurement request may include first indication information, where the first indication information indicates to activate sensing measurement in all sensing areas of a sensing device. For descriptions of the sensing measurement request, refer to the related descriptions of the first request in step 1303. Details are not described again.

Step 1404: The sensing device 1 performs sensing measurement.

Step 1405: The sensing device 1 reports a sensing measurement result to the SF. Correspondingly, the SF receives the sensing measurement result from the sensing device 1.

For descriptions of the step, refer to the related descriptions of step 1305. Details are not described again.

Step 1406: The SF sends a sensing measurement request to the sensing device 2. Correspondingly, the sensing device 2 receives the sensing measurement request from the SF.

The sensing measurement request may include the feature information of the target object and/or a second location of the target object. Alternatively, the sensing measurement request may include first indication information, where the first indication information indicates to activate sensing measurement in all sensing areas of a sensing device. For descriptions of the sensing measurement request, refer to the related descriptions of the second request in step 1304. Details are not described again.

Step 1407: The sensing device 2 performs sensing measurement.

Step 1408: The sensing device 2 reports a sensing measurement result to the SF. Correspondingly, the SF receives the sensing measurement result from the sensing device 2.

For descriptions of the step, refer to the related descriptions of step 1306. Details are not described again.

Step 1409: The SF aggregates the sensing measurement results to generate a movement trajectory of the target object.

Step 1410: The SF sends a sensing service response to the AF. Correspondingly, the AF receives the sensing service response from the SF.

The sensing service response includes the movement trajectory of the target object. For the sensing service response, refer to the foregoing descriptions of the third response. Details are not described again. For descriptions of step 1409 and step 1410, refer to the related descriptions of sending, by the sensing function network element, the movement trajectory of the target object to the application function network element. Details are not described again.

Optionally, as shown in step 1411, the SF may further send second indication information to the sensing device 1 and the sensing device 2, to indicate the sensing device 1 and the sensing device 2 to stop performing sensing measurement.

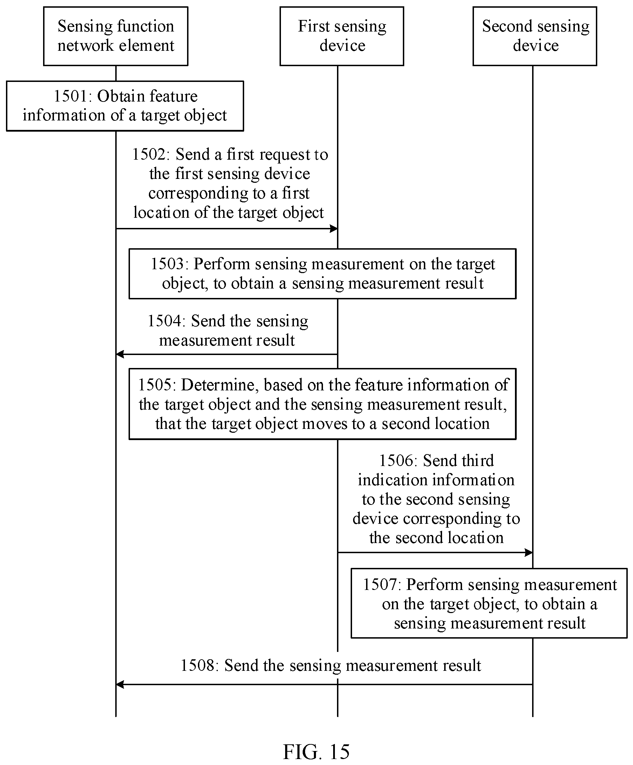

Different from descriptions that in FIG. 9 to FIG. 14A and FIG. 14B, the core network (such as the sensing function network element or the network repository function network element) determines each sensing device corresponding to the target object, as shown in FIG. 15, various sensing devices may exchange device information of the sensing devices, and the sensing device selects a next sensing device for the target object based on each sensing device, to implement continuous sensing of the target object.

FIG. 15 is a flowchart of a sensing measurement method according to an embodiment of this application. As shown in FIG. 15, the method may include the following steps.

Step 1501: A sensing function network element obtains feature information of a target object.

For descriptions of step 1501, refer to the related descriptions of step 901. Details are not described again.

Step 1502: The sensing function network element sends a first request to a first sensing device corresponding to the first location of the target object. Correspondingly, the first sensing device receives the first request from the sensing function network element.

The first request is used to request to perform sensing measurement, and the first request includes the feature information of the target object.

Optionally, the first request sent by the sensing function network element to the first sensing device may further include one or more of the following: the first location and a preset movement trajectory of the target object.

For descriptions of step 1502, refer to the related descriptions of step 902. Details are not described again.

Step 1503: The first sensing device performs sensing measurement on the target object, to obtain a sensing measurement result.

The first sensing device may measure the target object based on the feature information of the target object, to obtain the sensing measurement result of the target object.

Step 1504: The first sensing device sends a sensing measurement result to the sensing function network element. Correspondingly, the sensing function network element receives the sensing measurement result from the first sensing device.

For descriptions of step 1503 and step 1504, refer to the related descriptions of step 903. Details are not described again.

Step 1505: The first sensing device determines, based on the feature information of the target object and the sensing measurement result, that the target object moves to a second location.

The second location may be a location, in a movement trajectory of the target object, in a sensing overlapping area between the first sensing device and one or more other sensing devices. When the target object moves to the second location, the target object may subsequently move out of a sensing area of the first sensing device, and another sensing device (for example, the following second sensing device) may be required to continue sensing the target object. In this case, the first sensing device needs to determine a specific sensing device that continues sensing the target object, that is, needs to determine the second sensing device.

In a possible design, the first sensing device may determine, based on the sensing measurement result of performing sensing measurement on the target object, a location to which the target object continuously moves, for example, determine that the target object moves to the second location.

In another possible design, the first sensing device may alternatively determine the second location based on the preset movement trajectory of the target object, and determine, based on the sensing measurement result of the first sensing device, whether the target object moves to the second location.

In an actual communication scenario, an actual movement trajectory of the target object may deviate from the preset movement trajectory. When the target object moves to a location near the second location, it may also be considered that the target object moves to the second location.

Step 1506: The first sensing device sends third indication information to the second sensing device corresponding to the second location. Correspondingly, the second sensing device receives the third indication information from the first sensing device.

The third indication information may trigger the second sensing device to perform sensing measurement on the target object. The third indication information may include identification information of the target object.

Optionally, the third indication information may further indicate to report the sensing measurement result of the target object to the sensing function network element. The third indication information may further include identification information of the sensing function network element. It may be understood that the identification information of the sensing function network element may be specifically represented by a device identifier, an address, a port number, or the like. This is not limited in this application.

When the first sensing device determines that the target object moves to the second location, the first sensing device may determine the second sensing device based on the second location, and send the third indication information to the second sensing device.

Optionally, a sensing device in a network may exchange device information of the sensing device with another sensing device. In other words, the first sensing device may receive device information from one or more sensing devices.

Sensing devices may exchange device information through an Xn interface or a PC5 interface.

In a possible design, the first sensing device may determine the second sensing device from the one or more sensing devices based on the sensing measurement result and the device information.

The first sensing device may determine, based on the sensing measurement result, that the target object moves to the second location, and then determine, from the one or more sensing devices based on the received device information of the one or more sensing devices, the second sensing device corresponding to the second location.

In another possible design, the first sensing device may predict the movement trajectory of the target object based on the sensing measurement result, to obtain a predicted result, and determine the second sensing device from the one or more sensing devices based on the predicted result and the device information.

The first sensing device may predict the movement trajectory of the target object based on the sensing measurement result, to obtain the predicted result, determine the second location based on the predicted result, and then determine, from the one or more sensing devices based on the received device information of the one or more sensing devices, the second sensing device corresponding to the second location.

In still another possible design, the first sensing device may determine the second sensing device from the one or more sensing devices based on the preset movement trajectory of the target object and the device information.

The first sensing device may determine the second location based on the preset movement trajectory, and then determine, from the one or more sensing devices based on the received device information of the one or more sensing devices, the second sensing device corresponding to the second location.

In still another possible design, the first sensing device may alternatively determine the second sensing device from the one or more sensing devices based on the sensing measurement result, the preset movement trajectory of the target object, and the device information.

The first sensing device may determine the second location based on the preset movement trajectory, determine, based on the sensing measurement result, that the target object moves to the second location, and then determine, from the one or more sensing devices based on the received device information of the one or more sensing devices, the second sensing device corresponding to the second location.

Optionally, the third indication information sent by the first sensing device to the second sensing device may further include one or more of the following: the second location and the preset movement trajectory of the target object.

Optionally, the first sensing device may further send the third indication information to the second sensing device when determining, based on the feature information of the target object, the sensing measurement result of the first sensing device, and sensing area information of the second sensing device, that the target object enters a sensing area of the second sensing device.

Step 1507: The second sensing device performs sensing measurement on the target object, to obtain a sensing measurement result.

Step 1508: The second sensing device sends the sensing measurement result to the sensing function network element.

For descriptions of step 1507 and step 1508, refer to the related descriptions of step 906. Details are not described again.

In the method shown in FIG. 15, a sensing measurement process of the target object is described by using an example in which sensing devices corresponding to the target object in a moving process include the first sensing device and the second sensing device and the first sensing device is a start sensing device (that is, a 1^{st} sensing device corresponding to the target object in the moving process). In an actual communication process, the target object may correspond to a plurality of sensing devices in the moving process, for example, a fourth sensing device may be further included.

The second sensing device may determine, based on the feature information of the target object and the sensing measurement result, that the target object moves to a fourth location, and send fourth indication information to the fourth sensing device corresponding to the fourth location, and the fourth sensing device measures the target object based on the fourth indication information, and sends a sensing measurement result to the sensing function network element.

The fourth indication information may include the feature information of the target object and the identification information of the sensing function network element.

Optionally, the fourth indication information may further include one or more of the following: the fourth location and the preset movement trajectory of the target object.

For descriptions of "the second sensing device may determine, based on the feature information of the target object and the sensing measurement result, that the target object moves to a fourth location, and send fourth indication information to the fourth sensing device corresponding to the fourth location, and the fourth sensing device performs sensing measurement on the target object based on the fourth indication information, and sends a sensing measurement result to the sensing function network element", refer to the related descriptions of "the first sensing device determines, based on the feature information of the target object and the sensing measurement result, that the target object moves to the second location, and sends the third indication information to the second sensing device corresponding to the second location, and the second sensing device performs sensing measurement on the target object based on the third indication information, and sends the sensing measurement result to the sensing function network element" in step 1505 to step 1508. Details are not described again.

Based on the method shown in FIG. 15, the target object does not participate in the sensing measurement process, and the target object may have no identification information. The sensing function network element may determine, based on assistance information such as the feature information of the target object and the first location provided by an application function network element, a specific target object on which sensing measurement needs to be performed, and further trigger the first sensing device to perform sensing measurement on the target object. Because various sensing devices may exchange device information of the sensing devices, the first sensing device may select a next sensing device for the target object based on the received device information, for example, the second sensing device, and the second sensing device may also select a next sensing device for the target object based on the received device information, for example, the fourth sensing device, to ensure that the target object is always in a sensing area of the sensing device in the moving process, so that continuous sensing of the target object is implemented, and continuity of a sensing service is ensured.

Based on the method in FIG. 15, the sensing function network element may further determine the movement trajectory of the target object based on the sensing measurement results of the first sensing device and the second sensing device. The sensing function network element may further send the movement trajectory of the target object to the application function network element. For details, refer to the related descriptions of determining, by the sensing function network element, the movement trajectory of the target object based on the sensing measurement results of the first sensing device and the second sensing device, and sending the movement trajectory to the application function network element. Details are not described again.

Optionally, when receiving the movement trajectory of the target object sent by the sensing function network element, the application function network element may alternatively calibrate the movement trajectory of the target object based on one or more of the following: the feature information of the target object, the preset movement trajectory of the target object, and the location information of the target object.

Optionally, the sensing function network element may also calibrate the second location based on the location information of the target object sent by the application function network element. In other words, the sensing function network element searches the sensing measurement result for the target object based on the feature information, and then determines the second location of the target object. When the location information provided by the application function network element is introduced, the sensing function network element may more accurately search for the target object, to calibrate the second location.

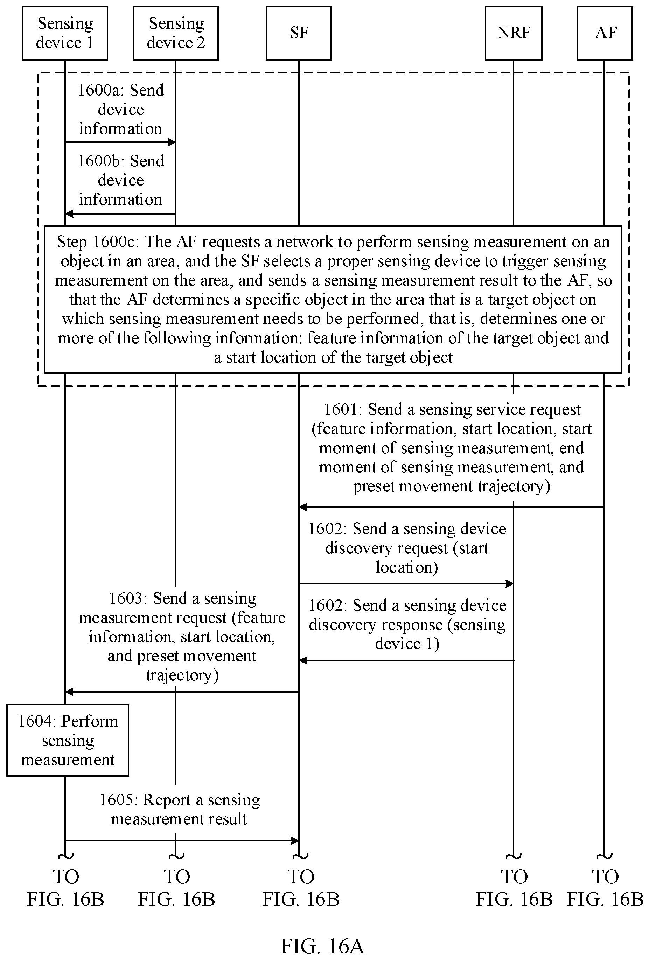

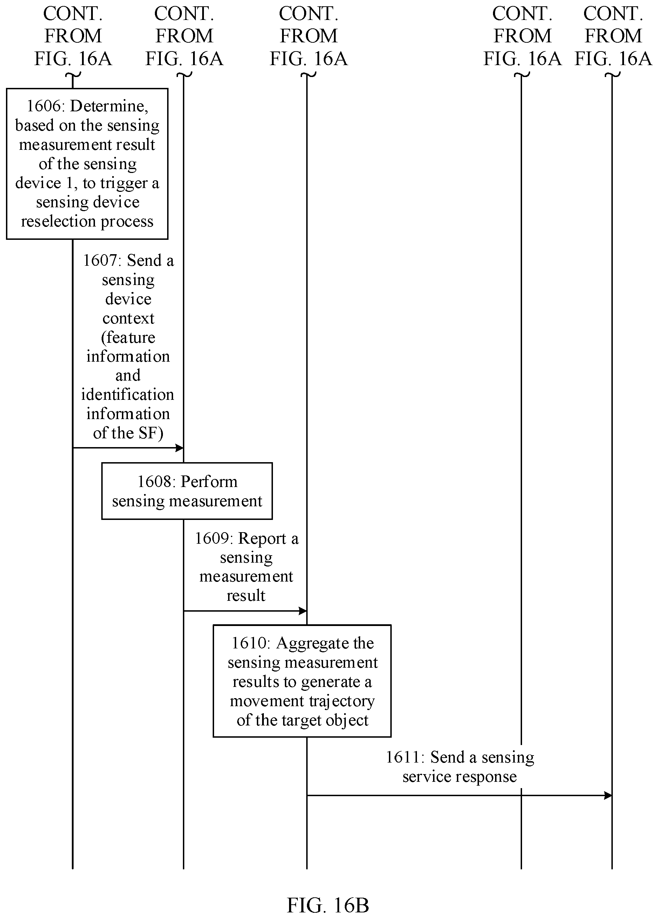

Based on the foregoing descriptions, the following uses an example in which an application function network element is an AF, a sensing function network element is an SF, a network repository function network element is an NRF, and sensing devices corresponding to a target object in a moving process include a sensing device 1 and a sensing device 2. Refer to FIG. 16A and FIG. 16B. The sensing measurement method shown in FIG. 15 is described by using an example.

FIG. 16A and FIG. 16B are a flowchart of a sensing measurement method according to an embodiment of this application. As shown in FIG. 16A and FIG. 16B, the sensing measurement method may include the following steps.

Step 1601: An AF sends a sensing service request to an SF. Correspondingly, the SF receives the sensing service request from the AF.

The sensing service request may include one or more of the following: feature information of a target object, a start location of the target object, a start moment of sensing measurement, an end moment of sensing measurement, and a preset movement trajectory of the target object.

Optionally, before the AF sends the sensing service request to the SF, the AF may determine the feature information of the target object and the start location of the target object based on step 1600c.

For descriptions of step 1600c, refer to the related descriptions of step 1200c in step 1201. Details are not described again.

Optionally, various sensing devices may further exchange device information of the sensing devices based on step 1600a and step 1600b.

Step 1602: The SF sends a sensing device discovery request to the NRF, and the NRF sends a sensing device discovery response to the SF. Correspondingly, the NRF receives the sensing device discovery request from the SF, and the SF receives the sensing device discovery response from the NRF.

The sensing device discovery request may include the start location of the target object. The NRF may determine, based on the start location and the device information of each sensing device, a sensing device 1 corresponding to the start location, and send identification information of the sensing device 1 to the SF by using the sensing device discovery response. The NRF may further send sensing area information of the sensing device 1 to the SF by using the sensing device discovery response.

Step 1603: The SF sends a sensing measurement request to the sensing device 1. Correspondingly, the sensing device 1 receives the sensing measurement request from the SF.

The sensing measurement request may be used to request to perform sensing measurement, and the sensing measurement request may include the feature information of the target object.

Optionally, the sensing measurement request may further include one or more of the following: the start location and the preset movement trajectory of the target object.

Step 1604: The sensing device 1 performs sensing measurement.

Step 1605: The sensing device 1 reports a sensing measurement result to the SF. Correspondingly, the SF receives the sensing measurement result from the sensing device 1.

For descriptions of the step, refer to the related descriptions of step 1503 and step 1504. Details are not described again.

Step 1606: The sensing device 1 determines, based on the sensing measurement result of the sensing device 1, to trigger a sensing device reselection process.

The sensing device 1 may determine a movement trajectory of the target object based on the sensing measurement result. When the target object leaves or is to leave a sensing area of the sensing device 1, the sensing device 1 may trigger the sensing device reselection process.

Step 1607: The sensing device 1 sends a sensing device context to a sensing device 2. Correspondingly, the sensing device 2 receives the sensing device context from the sensing device 1.

The sensing device context may include the feature information of the target object and identification information of the SF. Optionally, the sensing device context may further include one or more of the following: a second location and the preset movement trajectory of the target object. For descriptions of the sensing device context, refer to the foregoing descriptions of the third indication information. Details are not described again.

When determining, based on the feature information of the target object and the sensing measurement result, that the target object moves to the second location, the sensing device 1 may send the sensing device context to the sensing device 2 corresponding to the second location. For related descriptions, refer to the related descriptions of step 1505 and step 1506. Details are not described again.

Step 1608: The sensing device 2 performs sensing measurement.

Step 1609: The sensing device 2 reports a sensing measurement result to the SF. Correspondingly, the SF receives the sensing measurement result from the sensing device 2.

For descriptions of step 1608 and step 1609, refer to the related descriptions of step 1507 and step 1508. Details are not described again.

Step 1610: The SF aggregates the sensing measurement results to generate the movement trajectory of the target object.

Step 1611: The SF sends a sensing service response to the AF. Correspondingly, the AF receives the sensing service response from the SF.

The sensing service response includes the movement trajectory of the target object. For the sensing service response, refer to the foregoing descriptions of the third response. Details are not described again. For descriptions of step 1610 and step 1611, refer to the related descriptions of sending, by the sensing function network element, the movement trajectory of the target object to the application function network element. Details are not described again.

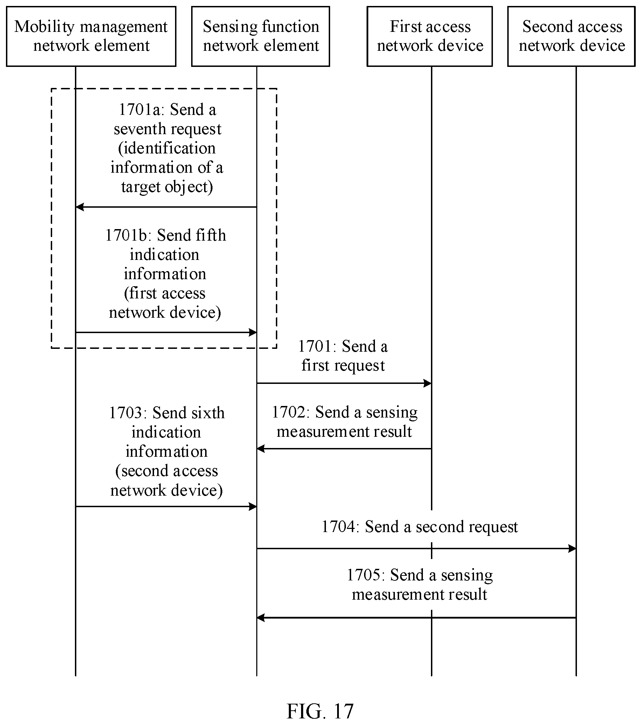

Different from descriptions that sensing measurement is performed on the target object based on the feature information of the target object in FIG. 9 to FIG. 16A and FIG. 16B, as shown in FIG. 17, continuous sensing measurement on the target object may alternatively be implemented based on the identification information of the target object by using a communication capability. For example, a sensing device (for example, an access network device having a sensing function) that can provide a communication link may be used for sensing. When a communication link of the target object is switched, switching of the sensing device may be triggered, to implement continuous sensing of the target object.

FIG. 17 is a flowchart of a sensing measurement method according to an embodiment of this application. As shown in FIG. 17, the method may include the following steps.

Step 1701: A sensing function network element sends a first request to a first access network device. Correspondingly, the first access network device receives the first request from the sensing function network element.

The first request may be used to request the first access network device to perform sensing measurement on a target object.

Optionally, the first request sent by the sensing function network element to the first access network device may include one or more of the following: identification information of the target object, feature information of the target object, a first location, first indication information, and a preset movement trajectory of the target object. The first indication information indicates to activate sensing measurement in all sensing areas of a sensing device.

The sensing function network element may include the identification information and/or the feature information and/or the first location of the target object in the first request sent to the first access network device, to indicate the first access network device to sense only the target object, thereby reducing power consumption caused by sensing. Alternatively, the sensing function network element may include the first indication information in the first request sent to the first access network device, to indicate the first access network device to activate sensing measurement in all sensing areas of the first access network device, thereby improving accuracy of a sensing measurement result.

Optionally, the sensing function network element may determine the first location of the target object based on a ninth request sent by an application function network element, or the sensing function network element may determine the first location of the target object via a mobility management network element.

Optionally, the sensing function network element may determine the first access network device based on the following step 1701a and step 1701b.

Step 1701a: The sensing function network element sends an eighth request to the mobility management network element. Correspondingly, the mobility management network element receives the eighth request from the sensing function network element.

The eighth request may be used to request to obtain identification information of an access network device accessed by the target object, and the eighth request includes the identification information of the target object.

Optionally, the sensing function network element may obtain the identification information of the target object from the application function network element or the mobility management network element.

The application function network element may send the identification information of the target object to the sensing function network element. Alternatively, the application function network element may send the identification information of the target object to a network exposure network element. The network exposure network element determines, based on the identification information of the target object, the mobility management network element corresponding to the target object, and then sends the identification information of the target object to the mobility management network element. The mobility management network element sends the identification information of the target object to the sensing function network element.

The network exposure network element may query, based on the identification information of the target object, a UDM for the mobility management network element corresponding to the target object.

Optionally, the application function network element may include the identification information of the target object in the ninth request and send the ninth request to the sensing function network element, or may send the ninth request to the sensing function network element via the network exposure network element and the mobility management network element.

The ninth request may be used to request to obtain a movement trajectory of the target object.

Optionally, the ninth request may further include one or more of the following: the first location of the target object, a start moment of sensing measurement, an end moment of sensing measurement, the preset movement trajectory of the target object, and the feature information of the target object.

Step 1701b: The mobility management network element sends fifth indication information to the sensing function network element. Correspondingly, the sensing function network element receives the fifth indication information from the mobility management network element.

The fifth indication information may include identification information of the first access network device. The first access network device may also be referred to as a first sensing device.

The mobility management network element may determine, based on the received eighth request, the access network device accessed by the target object as the first access network device, and indicate the first access network device to the sensing function network element by using the fifth indication information.

Optionally, if the target object is currently in a radio resource control (radio resource control, RRC) idle state, the mobility management network element may page the target object, so that the target object establishes an RRC connection to the access network device, and determines the access network device accessed by the target object as the first access network device.

Step 1702: The first access network device sends a sensing measurement result to the sensing function network element. Correspondingly, the sensing function network element receives the sensing measurement result from the first access network device.

The first access network device may perform sensing measurement based on the first request sent by the sensing function network element, obtain the sensing measurement result, and send the sensing measurement result to the sensing function network element.

Optionally, the sensing function network element may further send second indication information to the first access network device, where the second indication information indicates to stop sensing measurement. The first access network device stops sensing measurement based on the second indication information.

For example, the sensing function network element may send the second indication information to the first access network device when the target object is handed over from the first access network device to another access network device (for example, the following second access network device).

For another example, the sensing function network element may send the second indication information to the first access network device when determining, based on the sensing measurement result of the first access network device and sensing area information of the first access network device, that the target object leaves the sensing area of the first access network device.

For another example, the sensing function network element may alternatively predict the movement trajectory of the target object based on the sensing measurement result of the first access network device. The sensing function network element may send the second indication information to the first access network device when determining, based on a predicted result, that the target object is to leave the sensing area of the first access network device.

Step 1703: The mobility management network element sends sixth indication information to the sensing function network element. Correspondingly, the sensing function network element receives the sixth indication information from the mobility management network element.

The sixth indication information may include identification information of the second access network device currently accessed by the target object. The second access network device may also be referred to as a second sensing device.

The mobility management network element may indicate, based on the eighth request sent by the sensing function network element, the second access network device to the sensing function network element by using the sixth indication information when the target object is handed over from the first access network device to the second access network device.

For example, the sensing function network element may send a subscription request (that is, the eighth request) to the mobility management network element, and the subscription request may be used to subscribe to identification information of a target access network device of the target object. When the target object is handed over from the first access network device to the target access network device, the mobility management network element may send a subscription notification message to the sensing function network element. The subscription notification message may include the identification information of the target access network device and the identification information of the target object. The sensing function network element determines the target access network device as the second access network device based on the subscription notification message.

The eighth request may be used to request to obtain the access network device accessed by the target object, and the eighth request includes the identification information of the target object.

Step 1704: The sensing function network element sends a second request to the second access network device. Correspondingly, the second access network device receives the second request from the sensing function network element.

The second request may be used to request the second access network device to perform sensing measurement.

Optionally, the second request sent by the sensing function network element to the second access network device may include one or more of the following: the identification information of the target object, the feature information of the target object, a second location, first indication information, and the preset movement trajectory of the target object. The first indication information indicates to activate sensing measurement in all sensing areas of a sensing device.

The sensing function network element may include the identification information and/or the feature information and/or the second location of the target object in the second request sent to the second access network device, to indicate the second access network device to sense only the target object, thereby reducing power consumption caused by sensing. Alternatively, the sensing function network element may include the first indication information in the second request sent to the second access network device, to indicate the second access network device to activate sensing measurement in all sensing areas of the second access network device, thereby improving accuracy of a sensing measurement result.

For descriptions of the second location, refer to the descriptions of the second location in FIG. 9. Details are not described again.

Step 1705: The second access network device sends a sensing measurement result to the sensing function network element. Correspondingly, the sensing function network element receives the sensing measurement result from the second access network device.

The second access network device may perform sensing measurement based on the second request sent by the sensing function network element, obtain the sensing measurement result, and send the sensing measurement result to the sensing function network element.

Optionally, the sensing function network element may further send second indication information to the second access network device, where the second indication information indicates to stop sensing measurement. The second access network device stops sensing measurement based on the second indication information.

For example, the sensing function network element may send the second indication information to the second access network device when the target object is handed over from the second access network device to another access network device.

For another example, the sensing function network element may send the second indication information to the second access network device when determining, based on the sensing measurement result of the second access network device and sensing area information of the second access network device, that the target object leaves the sensing area of the second access network device.

For another example, the sensing function network element may alternatively predict the movement trajectory of the target object based on the sensing measurement result of the second access network device. The sensing function network element may send the second indication information to the second access network device when determining, based on a predicted result, that the target object is to leave the sensing area of the second access network device.

Based on the method shown in FIG. 17, the target object does not participate in a sensing measurement process, and the target object may have the identification information. The sensing function network element may implement continuous sensing measurement on the target object based on the identification information of the target object by using a communication capability. For example, an access network device (for example, an access network device having a sensing function, where the access network device may also be referred to as a sensing device) that can provide a communication link may be used for sensing. When a communication link of the target object is switched, switching of the access network device may be triggered, to ensure that the target object is always in a sensing area of the access network device in a moving process, so that continuous sensing of the target object is implemented, and continuity of a sensing service is ensured.

Based on the method in FIG. 17, the sensing function network element may further determine the movement trajectory of the target object based on the sensing measurement results of the first access network device and the second access network device. The sensing function network element may further send the movement trajectory of the target object to the application function network element. For details, refer to the related descriptions of determining, by the sensing function network element, the movement trajectory of the target object based on the sensing measurement results of the first access network device and the second access network device, and sending the movement trajectory to the application function network element. Details are not described again.

Optionally, when receiving the movement trajectory of the target object sent by the sensing function network element, the application function network element may alternatively calibrate the movement trajectory of the target object based on one or more of the following: the feature information of the target object, the preset movement trajectory of the target object, and the location information of the target object.

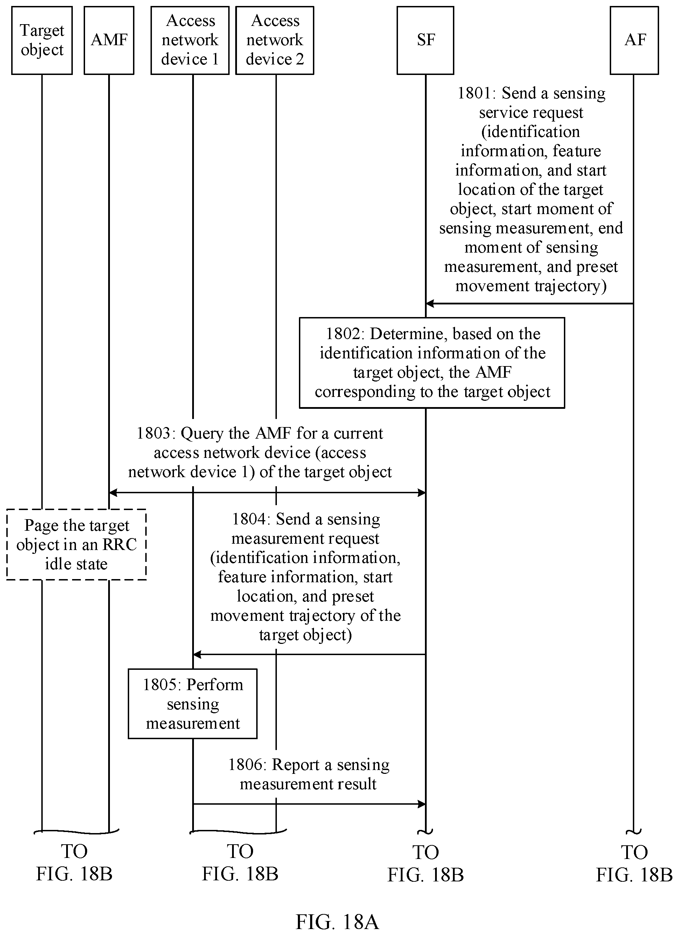

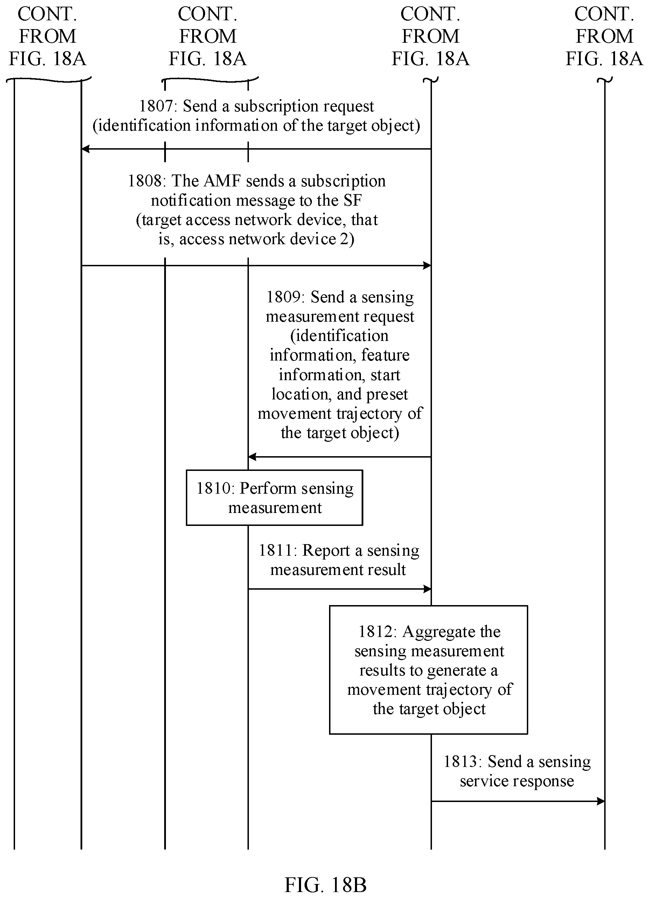

Based on the foregoing descriptions, the following uses an example in which an application function network element is an AF, a sensing function network element is an SF, a mobility management network element is an AMF, and sensing devices corresponding to a target object in a moving process include an access network device 1 and an access network device 2. Refer to FIG. 18A and FIG. 18B. The sensing measurement method shown in FIG. 17 is described by using an example.

FIG. 18A and FIG. 18B are a flowchart of a sensing measurement method according to an embodiment of this application. As shown in FIG. 18A and FIG. 18B, the sensing measurement method may include the following steps.

Step 1801: An AF sends a sensing service request to an SF. Correspondingly, the SF receives the sensing service request from the AF.

The sensing service request may include one or more of the following: identification information of a target object, feature information of the target object, a start location of the target object, a start moment of sensing measurement, an end moment of sensing measurement, and a preset movement trajectory of the target object.

Step 1802: The SF determines, based on the identification information of the target object, an AMF corresponding to the target object.

The SF may query a UDM for the AMF that serves the target object, to obtain identification information of the AMF.

Step 1803: The SF queries the AMF for identification information of a current access network device of the target object. Correspondingly, the SF receives the identification information of the access network device from the AMF.

If the target object is in an RRC idle state, the AMF may page the target object, so that the target object establishes an RRC connection to the access network device, and then sends the identification information of the access network device to the SF.

Step 1804: The SF sends a sensing measurement request to an access network device 1. Correspondingly, the access network device 1 receives the sensing measurement request from the SF.

The SF may determine the access network device indicated by the AMF as the access network device 1. The sensing measurement request may be used to request to perform sensing measurement.

Optionally, the sensing measurement request may include one or more of the following: the identification information of the target object, the feature information of the target object, the start location, first indication information, and the preset movement trajectory of the target object.

Step 1805: The access network device 1 performs sensing measurement.

Step 1806: The access network device 1 reports a sensing measurement result to the SF. Correspondingly, the SF receives the sensing measurement result from the access network device 1.

For descriptions of the step, refer to the related descriptions of step 1702. Details are not described again.

Step 1807: The SF sends a subscription request to the AMF. Correspondingly, the AMF receives the subscription request from the SF.

The subscription request may be used to subscribe to identification information of a target access network device of the target object.

The subscription request may include the identification information of the target object.

Step 1808: The AMF sends a subscription notification message to the SF. Correspondingly, the SF receives the subscription notification message from the AMF.

When the target object is handed over from the access network device 1 to the target access network device, the AMF may send the subscription notification message to the SF. The subscription notification message may include the identification information of the target access network device and the identification information of the target object.

Step 1809: The SF sends a sensing measurement request to an access network device 2. Correspondingly, the access network device 2 receives the sensing measurement request from the SF.

The SF may determine the target access network device as the access network device 2 based on the subscription notification message sent by the AMF.

Optionally, the sensing measurement request may include one or more of the following: the identification information of the target object, the feature information of the target object, a second location, first indication information, and the preset movement trajectory of the target object.

Step 1810: The access network device 2 performs sensing measurement.

Step 1811: The access network device 2 reports a sensing measurement result to the SF. Correspondingly, the SF receives the sensing measurement result from the access network device 2.

For descriptions of step 1810 and step 1811, refer to the related descriptions of step 1705. Details are not described again.

Step 1812: The SF aggregates the sensing measurement results to generate a movement trajectory of the target object.

Step 1813: The SF sends a sensing service response to the AF. Correspondingly, the AF receives the sensing service response from the SF.

The sensing service response includes the movement trajectory of the target object. For the sensing service response, refer to the foregoing descriptions of the third response. Details are not described again. For descriptions of step 1812 and step 1813, refer to the related descriptions of sending, by the sensing function network element, the movement trajectory of the target object to the application function network element. Details are not described again.

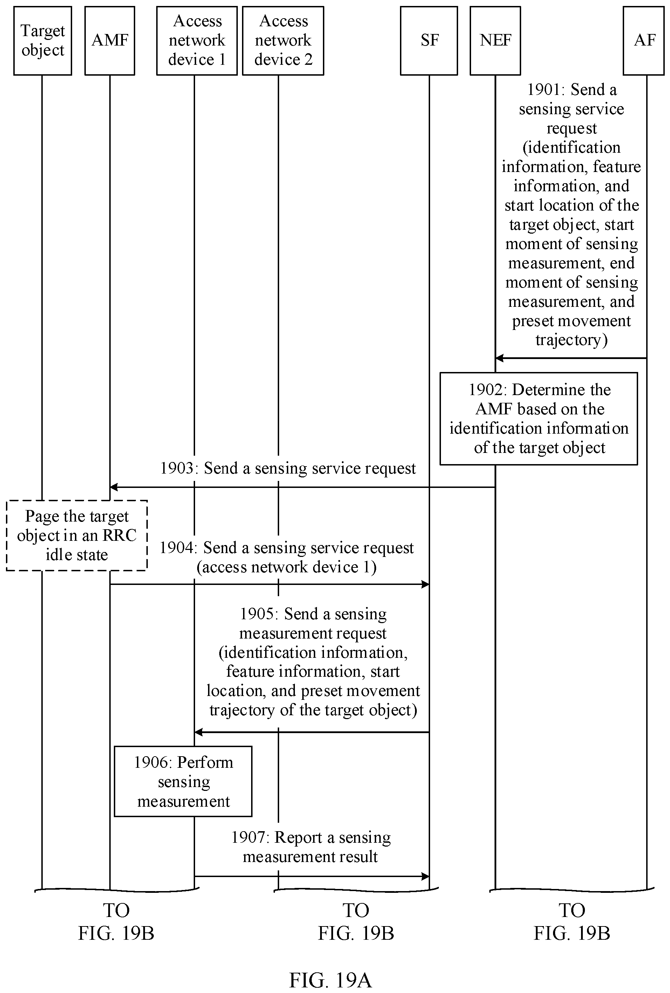

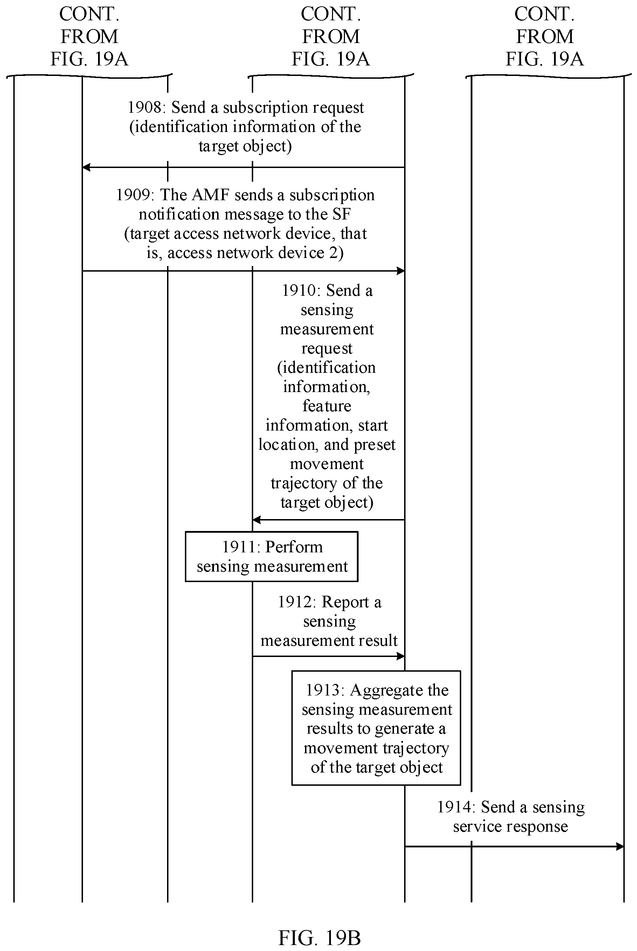

Different from descriptions that the AF sends the sensing service request to the SF in FIG. 18A and FIG. 18B, as shown in FIG. 19A and FIG. 19B, the AF may alternatively send the sensing service request to the SF via the AMF.

FIG. 19A and FIG. 19B are a flowchart of a sensing measurement method according to an embodiment of this application. As shown in FIG. 19A and FIG. 19B, the sensing measurement method may include the following steps.

Step 1901: An AF sends a sensing service request to a NEF. Correspondingly, the NEF receives the sensing service request from the AF.

The sensing service request may include one or more of the following: identification information of a target object, feature information of the target object, a start location of the target object, a start moment of sensing measurement, an end moment of sensing measurement, and a preset movement trajectory of the target object.

Step 1902: The NEF determines, based on the identification information of the target object, an AMF corresponding to the target object.

The NEF may query a UDM for the AMF that serves the target object, to obtain identification information of the AMF.

Step 1903: The NEF sends a sensing service request to the AMF. Correspondingly, the AMF receives the sensing service request from the NEF.

Step 1904: The AMF sends a sensing service request to the SF. Correspondingly, the SF receives the sensing service request from the AMF.

If the target object is in an RRC idle state, the AMF may page the target object, so that the target object establishes an RRC connection to an access network device, and then includes identification information of the access network device in the sensing service request and sends the sensing service request to the SF.

Step 1905: The SF sends a sensing measurement request to an access network device 1. Correspondingly, the access network device 1 receives the sensing measurement request from the SF.

The SF may determine the access network device indicated by the AMF as the access network device 1. The sensing measurement request may be used to request to perform sensing measurement.

Optionally, the sensing measurement request may include one or more of the following: the identification information of the target object, the feature information of the target object, the start location, first indication information, and the preset movement trajectory of the target object.

Step 1906: The access network device 1 performs sensing measurement.

Step 1907: The access network device 1 reports a sensing measurement result to the SF. Correspondingly, the SF receives the sensing measurement result from the access network device 1.

For descriptions of the step, refer to the related descriptions of step 1702. Details are not described again.

Step 1908: The SF sends a subscription request to the AMF. Correspondingly, the AMF receives the subscription request from the SF.

The subscription request may be used to subscribe to identification information of a target access network device of the target object.

The subscription request may include the identification information of the target object.

Step 1909: The AMF sends a subscription notification message to the SF. Correspondingly, the SF receives the subscription notification message from the AMF.

When the target object is handed over from the access network device 1 to the target access network device, the AMF may send the subscription notification message to the SF. The subscription notification message may include the identification information of the target access network device and the identification information of the target object.

Step 1910: The SF sends a sensing measurement request to an access network device 2. Correspondingly, the access network device 2 receives the sensing measurement request from the SF.

The SF may determine the target access network device as the access network device 2 based on the subscription notification message sent by the AMF.

Optionally, the sensing measurement request may include one or more of the following: the identification information of the target object, the feature information of the target object, a second location, first indication information, and the preset movement trajectory of the target object.

Step 1911: The access network device 2 performs sensing measurement.

Step 1912: The access network device 2 reports a sensing measurement result to the SF. Correspondingly, the SF receives the sensing measurement result from the access network device 2.

For descriptions of step 1911 and step 1912, refer to the related descriptions of step 1705. Details are not described again.

Step 1913: The SF aggregates the sensing measurement results to generate a movement trajectory of the target object.

Step 1914: The SF sends a sensing service response to the AF. Correspondingly, the AF receives the sensing service response from the SF.

The sensing service response includes the movement trajectory of the target object. For the sensing service response, refer to the foregoing descriptions of the third response. Details are not described again. For descriptions of step 1913 and step 1914, refer to the related descriptions of sending, by the sensing function network element, the movement trajectory of the target object to the application function network element. Details are not described again.

Based on the descriptions in FIG. 17 to FIG. 19A and FIG. 19B, optionally, the sensing function network element may further send a tenth request to a mobility management network element when determining that the breakpoint occurs in the movement trajectory of the target object. The tenth request may be used to request location information of the target object. The mobility management network element obtains the location information of the target object based on the tenth request, and sends the location information to the sensing function network element by using a tenth response. The sensing function network element calibrates the movement trajectory based on the received location information.

Optionally, if the target object is in the RRC idle state, the mobility management network element may page the target object, to obtain the location information of the target object.

Optionally, the mobility management network element may request a location management network element to position the target object, to obtain the location information of the target object.

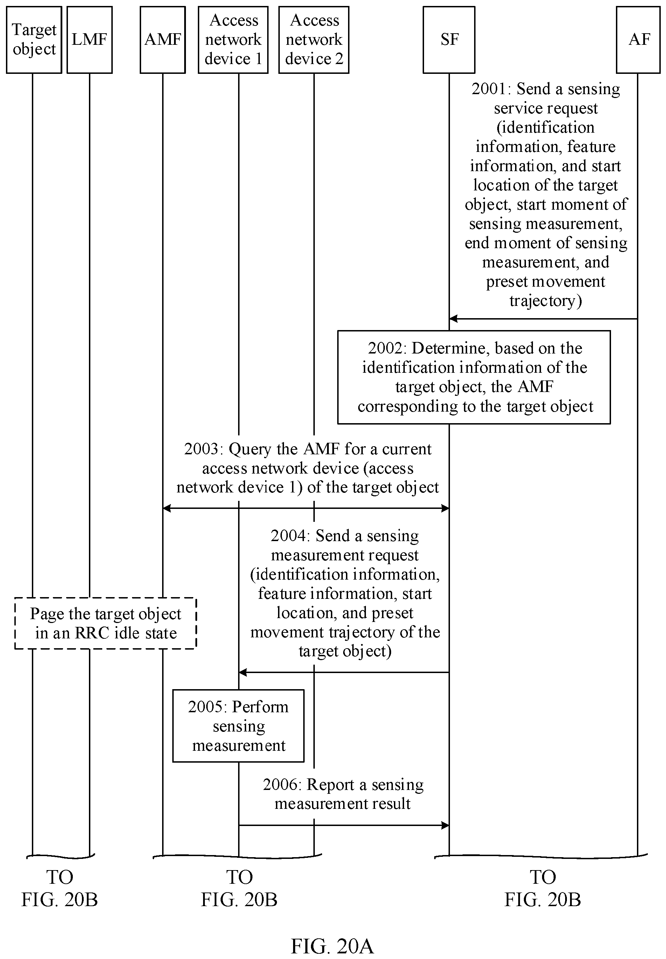

Based on the foregoing descriptions, the following uses an example in which an application function network element is an AF, a sensing function network element is an SF, a network repository function network element is an NRF, a mobility management network element is an AMF, a location management network element is a (location management function, LMF), and sensing devices corresponding to a target object in a moving process include an access network device 1 and an access network device 2. Refer to FIG. 20A and FIG. 20B. The sensing measurement methods shown in FIG. 17 to FIG. 19A and FIG. 19B are described in a supplementary manner.

FIG. 20A and FIG. 20B are a flowchart of a sensing measurement method according to an embodiment of this application. As shown in FIG. 20A and FIG. 20B, the sensing measurement method may include the following steps.

Step 2001: An AF sends a sensing service request to an SF. Correspondingly, the SF receives the sensing service request from the AF.

The sensing service request may include one or more of the following: identification information of a target object, feature information of the target object, a start location of the target object, a start moment of sensing measurement, an end moment of sensing measurement, and a preset movement trajectory of the target object.

Step 2002: The SF determines, based on the identification information of the target object, an AMF corresponding to the target object.

The SF may query a UDM for the AMF that serves the target object, to obtain identification information of the AMF.

Step 2003: The SF queries the AMF for identification information of a current access network device of the target object. Correspondingly, the SF receives the identification information of the access network device from the AMF.

If the target object is in an RRC idle state, the AMF may page the target object, so that the target object establishes an RRC connection to the access network device, and then sends the identification information of the access network device to the SF.

Step 2004: The SF sends a sensing measurement request to an access network device 1. Correspondingly, the access network device 1 receives the sensing measurement request from the SF.

The SF may determine the access network device indicated by the AMF as the access network device 1. The sensing measurement request may be used to request to perform sensing measurement.

Optionally, the sensing measurement request may include one or more of the following: the identification information of the target object, the feature information of the target object, the start location, first indication information, and the preset movement trajectory of the target object.

Step 2005: The access network device 1 performs sensing measurement.

Step 2006: The access network device 1 reports a sensing measurement result to the SF. Correspondingly, the SF receives the sensing measurement result from the access network device 1.

Optionally, step 2001 to step 2006 may alternatively be replaced with step 1901 to step 1907. This is not limited.

Step 2007: When determining, based on the sensing measurement result, that a breakpoint occurs in a movement trajectory of the target object, the SF triggers a procedure of positioning the target object by the AMF.

Step 2008: The AMF requests an LMF to position the target object.

If the target object is in the RRC idle state, the AMF may page the target object, so that the target object establishes the RRC connection to the access network device, and then the LMF can position the target object.

Step 2009: The LMF sends location information of the target object to the SF.

The LMF may directly send the location information of the target object to the SF, or may send the location information of the target object to the SF via the AMF. This is not limited.

Step 2010: The SF calibrates the movement trajectory based on the location information of the target object.

Optionally, after calibrating the movement trajectory, the SF may further continue to perform sensing measurement on the target object with reference to the following step 2011 to step 2017.

Step 2011: The SF sends a subscription request to the AMF. Correspondingly, the AMF receives the subscription request from the SF.

The subscription request may be used to subscribe to identification information of a target access network device of the target object.

The subscription request may include the identification information of the target object.

Step 2012: The AMF sends a subscription notification message to the SF. Correspondingly, the SF receives the subscription notification message from the AMF.

When the target object is handed over from the access network device 1 to the target access network device, the AMF may send the subscription notification message to the SF. The subscription notification message may include the identification information of the target access network device and the identification information of the target object.

Step 2013: The SF sends a sensing measurement request to an access network device 2. Correspondingly, the access network device 2 receives the sensing measurement request from the SF.

The SF may determine the target access network device as the access network device 2 based on the subscription notification message sent by the AMF.

Optionally, the sensing measurement request may include one or more of the following: the identification information of the target object, the feature information of the target object, a second location, first indication information, and the preset movement trajectory of the target object.

Step 2014: The access network device 2 performs sensing measurement.

Step 2015: The access network device 2 reports a sensing measurement result to the SF. Correspondingly, the SF receives the sensing measurement result from the access network device 2.

Step 2016: The SF aggregates the sensing measurement results to generate the movement trajectory of the target object.

Step 2017: The SF sends a sensing service response to the AF. Correspondingly, the AF receives the sensing service response from the SF.

The sensing service response includes the movement trajectory of the target object.

It should be noted that various embodiments of this application may be implemented separately, or may be implemented in combination. This is not limited. Unless otherwise stated or there is a logic conflict, terms and/or descriptions in different embodiments provided by this application are consistent and may be mutually referenced, and technical features in different embodiments may be combined based on an internal logical relationship thereof, to form a new embodiment.

It may be understood that an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all operations in embodiments of this application need to be performed.

The solutions provided in embodiments of this application are mainly described above from a perspective of interaction between the devices. It may be understood that, to implement the foregoing functions, each device includes a corresponding hardware structure and/or a corresponding software module for performing each function. A person skilled in the art should easily be aware that, in combination with algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of each device may be obtained through division according to the foregoing method example. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

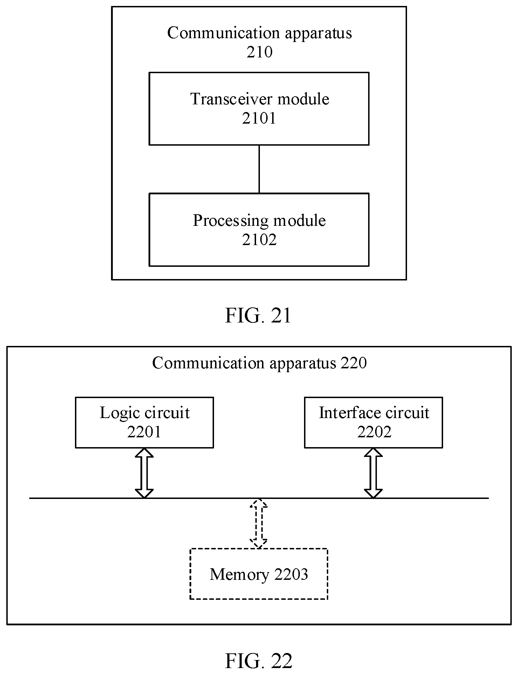

When each functional module is obtained through division based on each corresponding function, FIG. 21 shows a communication apparatus 210. The communication apparatus 210 may perform actions performed by the sensing function network element, the sensing device, the application function network element, the mobility management network element, or the like in the methods shown in FIG. 9 to FIG. 20A and FIG. 20B. All related content of the steps in the foregoing method embodiments may be referenced to function descriptions of the corresponding functional modules. For technical effects that can be obtained by the communication apparatus 210, refer to the foregoing method embodiments. Details are not described herein again.

The communication apparatus 210 may include a transceiver module 2101 and a processing module 2102. For example, the communication apparatus 210 may be a communication device, or may be a chip used in the communication device, or another combined device or component that has a function of the communication apparatus. When the communication apparatus 210 is a communication device, the transceiver module 2101 may be a transceiver, where the transceiver may include an antenna, a radio frequency circuit, and the like; and the processing module 2102 may be a processor (or a processing circuit), for example, a baseband processor, where the baseband processor may include one or more CPUs. When the communication apparatus 210 is a component that has a function of the communication apparatus, the transceiver module 2101 may be a radio frequency unit, and the processing module 2102 may be a processor (or a processing circuit), for example, a baseband processor. When the communication apparatus 210 is a chip system, the transceiver module 2101 may be an input/output interface of a chip (for example, a baseband chip), and the processing module 2102 may be a processor (or a processing circuit) of the chip system and may include one or more central processing units. It should be understood that the transceiver module 2101 in this embodiment of this application may be implemented by a transceiver or a transceiver-related circuit component, and the processing module 2102 may be implemented by a processor or a processor-related circuit component (also referred to as a processing circuit).

For example, the transceiver module 2101 may be configured to perform all sending and receiving operations performed by the communication apparatus in the embodiments shown in FIG. 9 to FIG. 20A and FIG. 20B, and/or another process used to support the technology described in this specification. The processing module 2102 may be configured to perform all operations except the sending and receiving operations performed by the communication apparatus in the embodiments shown in FIG. 9 to FIG. 20A and FIG. 20B, and/or another process used to support the technology described in this specification.

In another possible implementation, the transceiver module 2101 in FIG. 21 may be replaced with a transceiver, and a function of the transceiver module 2101 may be integrated into the transceiver. The processing module 2102 may be replaced with a processor, and a function of the processing module 2102 may be integrated into the processor. The communication apparatus 210 shown in FIG. 21 may further include a memory.

Alternatively, when the processing module 2102 is replaced with a processor, and the transceiver module 2101 is replaced with a transceiver, the communication apparatus 210 in this embodiment of this application may be a communication apparatus 220 shown in FIG. 22. The processor may be a logic circuit 2201, and the transceiver may be an interface circuit 2202. The communication apparatus 220 shown in FIG. 22 may further include a memory 2203.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of the procedures in the foregoing method embodiments may be implemented by a computer program instructing related hardware. The program may be stored in the computer-readable storage medium. When the program is executed, the procedures of the foregoing method embodiments may be included. The computer-readable storage medium may be an internal storage unit of the terminal (including a data transmitting side and/or a data receiving side) in any one of the foregoing embodiments, for example, a hard disk drive or a memory of the terminal. Alternatively, the computer-readable storage medium may be an external storage device of the terminal, for example, a plug-in hard disk drive, a smart media card (smart media card, SMC), a secure digital (secure digital, SD) card, a flash card (flash card), or the like that are configured on the terminal. Further, the computer-readable storage medium may alternatively include both of the internal storage unit of the terminal and the external storage device. The computer-readable storage medium is configured to store the computer program and other programs and data that are required by the terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of embodiments, unless otherwise specified, "a plurality of" means two or more.

In addition, the terms "include", "have", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" means one or more. ''A plurality of'' means two or more. "At least two (items)" means two, three, or more than three. The term "and/or" is used to describe an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural. Both "when ..." and "if" mean that corresponding processing is performed in an objective case, are not intended to limit time, do not require a determining action during implementation, and do not mean that there is another limitation.

In embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

In this application, "sending information to ... (a terminal device)" may be understood as that a destination of the information is the terminal device, and may include directly or indirectly sending the information to the terminal device; and "receiving information from ... (a terminal device)" may be understood as that a source of the information is the terminal device, and may include directly or indirectly receiving the information from the terminal device. The information may undergo necessary processing, for example, a format change, between the source for sending the information and the destination. However, the destination may understand valid information from the source.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such understanding, the technical solutions of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A sensing measurement method, comprising:
obtaining feature information of a target object;
sending a first request to a first sensing device corresponding to a first location of the target object, wherein the first request is used to request to perform sensing measurement;
receiving a sensing measurement result from the first sensing device;
determining, based on the feature information of the target object and the sensing measurement result of the first sensing device, that the target object moves to a second location;
sending a second request to a second sensing device corresponding to the second location, wherein the second request is used to request to perform sensing measurement; and
receiving a sensing measurement result from the second sensing device.

2. The method according to claim 1, wherein
the feature information of the target object comprises one or more of the following: a shape of the target object, a volume of the target object, and a size of the target object.

3. The method according to claim 1 or 2, wherein the obtaining the feature information of the target object comprises:
receiving a third request from an application function network element; or
receiving a third request from a mobility management network element, wherein
the third request is used to request to obtain a movement trajectory of the target object, and the third request comprises the feature information of the target object.

4. The method according to claim 3, wherein
the third request further comprises one or more of the following: the first location, a start moment of sensing measurement, an end moment of sensing measurement, and a preset movement trajectory of the target object.

5. The method according to any one of claims 1 to 4, wherein before the sending the first request to the first sensing device corresponding to the first location of the target object, the method further comprises:
receiving a sensing measurement result from a third sensing device; and
determining, based on the feature information of the target object and the sensing measurement result of the third sensing device, that the target object moves to the first location.

6. The method according to any one of claims 1 to 5, wherein the third request comprises the preset movement trajectory, and before the sending the second request to the second sensing device corresponding to the second location, the method further comprises:
sending a fourth request to a network repository function network element, wherein the fourth request is used to request to discover a sensing device, and the fourth request comprises the preset movement trajectory; and
receiving a fourth response from the network repository function network element, wherein the fourth response comprises identification information of one or more sensing devices corresponding to the preset movement trajectory and sensing area information of each sensing device.

7. The method according to any one of claims 1 to 5, wherein before the sending the second request to the second sensing device corresponding to the second location, the method further comprises:
receiving device information from the mobility management network element, wherein the device information comprises identification information of one or more sensing devices and sensing area information of each sensing device.

8. The method according to any one of claims 1 to 5, wherein before the sending the second request to the second sensing device corresponding to the second location, the method further comprises:
sending a fourth request to a network repository function network element, wherein the fourth request is used to request to discover a sensing device, and the fourth request comprises the second location; and
receiving a fourth response from the network repository function network element, wherein the fourth response comprises identification information of one or more sensing devices and sensing area information of each sensing device.

9. The method according to claim 7 or 8, wherein the method further comprises:
determining the second sensing device from the one or more sensing devices based on the second location and sensing area information of the one or more sensing devices; or
predicting the movement trajectory of the target object based on the sensing measurement result of the first sensing device, to obtain a predicted result, and determining the second sensing device from the one or more sensing devices based on the predicted result and sensing area information of the one or more sensing devices.

10. The method according to any one of claims 1 to 9, wherein the sending the second request to the second sensing device corresponding to the second location comprises:
sending the second request to the second sensing device when determining that the target object enters a sensing area of the second sensing device.

11. The method according to any one of claims 1 to 10, wherein
the first request comprises one or more of the following: the feature information of the target object, the first location, and first indication information; and/or
the second request comprises one or more of the following: the feature information of the target object, the second location, and first indication information, wherein
the first indication information indicates to activate sensing measurement in all sensing areas of a sensing device.

12. The method according to any one of claims 1 to 11, wherein the method further comprises:
determining the movement trajectory of the target object based on the sensing measurement result of the first sensing device and the sensing measurement result of the second sensing device; and
sending the movement trajectory to the application function network element.

13. The method according to claim 12, wherein the method further comprises:
receiving location information of the target object from the application function network element; and
calibrating the movement trajectory based on the location information.

14. The method according to any one of claims 1 to 13, wherein the method further comprises:
sending second indication information to the first sensing device, wherein the second indication information indicates to stop sensing measurement.

15. The method according to claim 14, wherein the sending the second indication information to the first sensing device comprises:
sending the second indication information to the first sensing device when determining that the target object leaves a sensing area of the first sensing device.

16. A sensing measurement method, comprising:
receiving a first request from a sensing function network element, wherein the first request is used to request to perform sensing measurement, and the first request comprises feature information of a target object;
performing sensing measurement on the target object, to obtain a sensing measurement result;
determining, based on the feature information of the target object and the sensing measurement result, that the target object moves to a second location; and
sending third indication information to a second sensing device corresponding to the second location, wherein the third indication information is used to trigger the second sensing device to perform sensing measurement on the target object, and the third indication information comprises the feature information of the target object.

17. The method according to claim 16, wherein the third indication information further comprises one or more of the following: the second location, a preset movement trajectory of the target object, and identification information of the sensing function network element.

18. The method according to claim 16 or 17, wherein the method further comprises:
sending the sensing measurement result to the sensing function network element.

19. The method according to any one of claims 16 to 18, wherein
the feature information of the target object comprises one or more of the following: a shape of the target object, a volume of the target object, and a size of the target object.

20. The method according to any one of claims 16 to 19, wherein
the first request further comprises one or more of the following: a first location of the target object and the preset movement trajectory of the target object.

21. The method according to any one of claims 16 to 20, wherein before the sending the third indication information to the second sensing device corresponding to the second location, the method further comprises:
receiving device information of one or more sensing devices, wherein the device information comprises identification information of the sensing device and sensing area information of the sensing device; and
determining the second sensing device from the one or more sensing devices based on the second location and the device information;
predicting a movement trajectory of the target object based on the sensing measurement result, to obtain a predicted result, and determining the second sensing device from the one or more sensing devices based on the predicted result and the device information;
determining the second sensing device from the one or more sensing devices based on the preset movement trajectory of the target object and the device information; or
determining the second sensing device from the one or more sensing devices based on the second location and/or the predicted result, the preset movement trajectory of the target object, and the device information.

22. The method according to claim 21, wherein the receiving the device information of the one or more sensing devices comprises:
receiving the device information from the one or more sensing devices; or
receiving the device information from the sensing function network element or a mobility management network element.

23. A sensing measurement method, comprising:
sending a first request to a first access network device, and receiving a sensing measurement result from the first access network device, wherein the first request is used to request the first access network device to perform sensing measurement on a target object;
receiving sixth indication information from the mobility management network element, wherein the sixth indication information comprises identification information of a second access network device currently accessed by the target object; and
sending a second request to the second access network device based on the sixth indication information, and receiving a sensing measurement result from the second access network device, wherein the second request is used to request the second access network device to perform sensing measurement.

24. The method according to claim 23, wherein the method further comprises:
sending an eighth request to the mobility management network element, wherein the eighth request is used to request to obtain identification information of an access network device accessed by the target object, the access network device has a sensing capability, and the eighth request comprises identification information of the target object.

25. The method according to claim 23 or 24, wherein before the sending the first request to the first access network device, the method further comprises:
receiving fifth indication information from the mobility management network element, wherein the fifth indication information comprises identification information of the first access network device.

26. The method according to claim 24, wherein before the sending the eighth request to the mobility management network element, the method further comprises:
receiving a ninth request from an application function network element; or
receiving a ninth request from the mobility management network element, wherein
the ninth request is used to request to obtain a movement trajectory of the target object, and the ninth request comprises the identification information of the target object.

27. The method according to claim 26, wherein
the ninth request further comprises one or more of the following: a first location of the target object, a start moment of sensing measurement, an end moment of sensing measurement, a preset movement trajectory of the target object, and feature information of the target object, wherein
the feature information of the target object comprises one or more of the following: a shape of the target object, a volume of the target object, and a size of the target object.

28. The method according to any one of claims 23 to 27, wherein
the first request comprises one or more of the following: the identification information of the target object, the feature information of the target object, the first location of the target object, first indication information, and the preset movement trajectory of the target object; and/or
the second request comprises one or more of the following: the identification information of the target object, the feature information of the target object, a second location of the target object, first indication information, and the preset movement trajectory of the target object, wherein
the first indication information indicates to activate sensing measurement in all sensing areas of a sensing device.

29. The method according to any one of claims 23 to 28, wherein the method further comprises:
sending second indication information to the first access network device, wherein the second indication information indicates to stop sensing measurement.

30. The method according to claim 29, wherein the sending the second indication information to the first access network device comprises:
sending the second indication information to the first access network device when determining that the target object leaves a sensing area of the first access network device; or
sending the second indication information to the first access network device when determining, based on the identification information of the second access network device, that the target object leaves a sensing area of the first access network device.

31. The method according to any one of claims 23 to 30, wherein the method further comprises:
determining the movement trajectory of the target object from the sensing measurement result based on the identification information of the target object or the feature information of the target object; and
sending the movement trajectory to the application function network element or the mobility management network element.

32. The method according to claim 31, wherein the method further comprises:
receiving location information of the target object from the application function network element; and
calibrating the movement trajectory based on the location information.

33. The method according to claim 31 or 32, wherein the method further comprises:
sending a tenth request to the mobility management network element, wherein the tenth request is used to request the location information of the target object;
receiving a tenth response from the mobility management network element, wherein the tenth response comprises the location information of the target object; and
calibrating the movement trajectory based on the location information.

34. A communication apparatus, wherein the communication apparatus comprises a processor, and the processor is configured to run a computer program or instructions, so that the sensing measurement method according to any one of claims 1 to 15 is performed, the sensing measurement method according to any one of claims 16 to 22 is performed, or the sensing measurement method according to any one of claims 23 to 33 is performed.

35. The communication apparatus according to claim 34, wherein
the communication apparatus further comprises a memory, and the memory is configured to store the computer program or the instructions.

36. A communication apparatus, wherein the communication apparatus comprises an interface circuit and a logic circuit, the interface circuit is configured to input and/or output information, and the logic circuit is configured to perform the sensing measurement method according to any one of claims 1 to 15, perform the sensing measurement method according to any one of claims 16 to 22, or perform the sensing measurement method according to any one of claims 23 to 33, and perform processing based on the information and/or generate the information.

37. A computer-readable storage medium, wherein the computer-readable storage medium stores computer instructions or a program, and when the computer instructions or the program is run on a computer, the sensing measurement method according to any one of claims 1 to 15 is performed, the sensing measurement method according to any one of claims 16 to 22 is performed, or the sensing measurement method according to any one of claims 23 to 33 is performed.

38. A computer program product, wherein the computer program product comprises computer instructions; and when a part or all of the computer instructions are run on a computer, the sensing measurement method according to any one of claims 1 to 15 is performed, the sensing measurement method according to any one of claims 16 to 22 is performed, or the sensing measurement method according to any one of claims 23 to 33 is performed.
